(19) Europäisches Patentamt / European Patent Office / Office européen des brevets

(11) **EP 4 685 042 A1**

(12) **EUROPEAN PATENT APPLICATION**

(43) Date of publication:
**28.01.2026 Bulletin 2026/05**

(21) Application number: **24213680.2**

(22) Date of filing: **18.11.2024**

(51) International Patent Classification (IPC):
**B62M 6/45** (2010.01)    **B62M 19/00** (2006.01)

(52) Cooperative Patent Classification (CPC):
**B62M 6/45; B60L 3/12; B60L 15/20; B60L 50/20; B62M 19/00;** B60L 2200/12; B60L 2200/14; B60L 2200/16; B60L 2200/22; B60L 2240/421; B60L 2240/423; B60L 2240/463; B60L 2240/486; B60L 2270/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.07.2024 KR 20240097409**

(71) Applicant: **HL Mando Corporation**
**Pyeongtaek-si, Gyeonggi-do 17962 (KR)**

(72) Inventor: **KIM, Do Hyun**
**17962 Pyeongtaek-si, Gyeonggi-do (KR)**

(74) Representative: **Pfenning, Meinig & Partner mbB**
**Patent- und Rechtsanwälte**
**Joachimsthaler Straße 10-12**
**10719 Berlin (DE)**

(54) **MOBILITY DRIVING CONTROL DEVICE AND METHOD**

(57)    The present embodiments relate to a mobility driving control device and method. A mobility driving control device may determine a final torque value based on at least one of a virtual elastic body torque value, a rebound torque value, and a damping torque value determined based on pedal driving state information and wheel driving state information, so as to provide a pedal feel to a pedal through a first rotator controlled based on the final torque value.

## FIG.1

**Description**

CROSS REFERENCE TO RELATED APPLICATION

This application claims priority from Korean Patent Application No. 10-2024-0097409, filed on July 23, 2024, which is hereby incorporated by reference for all purposes as if fully set forth herein.

TECHNICAL FIELD

An embodiment of the present disclosure relates to a mobility driving control device and method.

BACKGROUND

A mobility may mean a means of transportation capable of moving.
This mobility may be combining IT technology to increase the convenience of daily life. Accordingly, the mobility is expanding to include not only movement but also various services capable of providing convenience, including conventional transportation, delivery, and travel.
Recently, as driving stability has become important in this type of mobility, there is required a research and development on driving technology of the mobility.

SUMMARY

Embodiments of the present disclosure are to provide a mobility driving control device and method capable of improving driving stability.
In accordance with an aspect of the present disclosure, there may be provided a mobility driving control device for controlling a first rotator to assist a pedal unit, which includes a pedal and is mechanically separated from a wheel unit including a wheel for moving a mobility, configured to determine a final torque value based on at least one of a virtual elastic body torque value, a rebound torque value, and a damping torque value determined based on pedal driving state information and wheel driving state information, so as to provide a pedal feel to the pedal through the first rotator controlled based on the final torque value, wherein the virtual elastic body torque value is a value corresponding to a virtual restoring force for a virtual elastic body which virtually connects the wheel unit including the wheel and the pedal unit including the pedal.
In accordance with another aspect of the present disclosure, there may be provided a mobility driving control method for controlling a first rotator to assist a pedal unit, which includes a pedal and is mechanically separated from a wheel unit including a wheel for moving a mobility, including determining a final torque value based on at least one of a virtual elastic body torque value, a rebound torque value, and a damping torque value determined based on pedal driving state information and wheel driving state information, so as to provide a pedal feel to the pedal through the first rotator controlled based on the final torque value, wherein the virtual elastic body torque value is a value corresponding to a virtual restoring force for a virtual elastic body which virtually connects the wheel unit including the wheel and the pedal unit including the pedal.
According to the present embodiments, it is possible to provide a mobility driving control device and method capable of improving pedal feel in addition to the driving stability.

BRIEF DESCRIPTION OF THE DRAWINGS

FIG. 1 is a diagram for explaining a mobility driving system according to the present embodiments.
FIG. 2 is a diagram for explaining a first driving assist device according to the present embodiments.
FIG. 3 is a diagram for explaining a second driving assist device according to the present embodiments.
FIG. 4 is a diagram for explaining a sensor device according to the present embodiments.
FIG. 5 is a diagram for explaining a mobility driving control device according to the present embodiments.
FIG. 6 is a diagram for explaining a first controller according to the present embodiments.
FIG. 7 is a diagram for explaining a second controller according to the present embodiments.
FIG. 8 is a diagram for explaining a first torque value generator according to the present embodiments.
FIG. 9 and FIG. 10 are diagrams for explaining a virtual elastic body coefficient according to the present embodiments.
FIG. 11 and FIG. 12 are diagrams for explaining a mobility driving control method according to the present embodiments.

FIG. 13 is a diagram for explaining a mobility driving control device and method according to the present embodiments, a mobility driving assist device, and a computer system of a mobility driving system.

## DETAILED DESCRIPTION

In the following description of examples or embodiments of the present disclosure, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the present disclosure, detailed descriptions of well-known functions and components incorporated herein will be omitted when it is determined that the description may make the subject matter in some embodiments of the present disclosure rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

There will be understood by those skilled in the art that the term "position" described below may be replaced with other terms having equivalent meanings, such as location, displacement, movement, angle, etc.

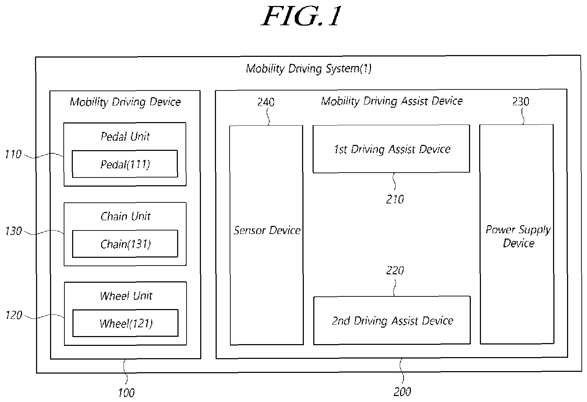

FIG. 1 is a diagram for explaining a mobility driving system according to the present embodiments.

Referring to FIG. 1, a mobility driving system 1 according to the present embodiments may be a system capable of moving a mobility. The mobility driving system 1 may be mounted on a mobility body (or, a mobility skeleton, a mobility frame, etc.). The mobility driving system 1 may include at least one of a mobility driving device 100 and a mobility driving assist device 200. The mobility driving device 100 and the mobility driving assist device 200 may be connected to each other.

The mobility driving device 100 may receive driver power (or, pedal power) from a driver and move the mobility based on the driver power. The mobility driving device 100 may include at least one of a pedal unit 110, a chain unit 130, and a wheel unit 120. The pedal unit 110, the chain unit 130, and the wheel unit 120 may be connected to each other.

The pedal unit 110 may receive driver power (or pedal power) from the driver. The pedal unit 110 may rotate based on the driver power (or pedal power) to generate rotational power. The pedal unit 110 may provide rotational power to at least one of the chain unit 130 and the wheel unit 120.

The pedal unit 110 may receive a pedal feel from the mobility driving assist device 200. The pedal unit 110 may provide the pedal feel to the driver.

The pedal unit 110 may be mounted on a mobility body. The pedal unit 110 may include a pedal 111. In addition, the pedal unit 110 may include at least one of a pedal shaft (e.g., a crank shaft, etc.) and a gear, but is not limited thereto, and any device may be included as long as it may generate rotational force by rotating based on driver power (or pedal force) or provide a pedal feel provided from the mobility driving assist device 200 to the driver.

The wheel unit 120 may move the mobility. For example, the wheel unit 120 may rotate based on driver power (or pedal force) and move the mobility based on the rotation of the wheel unit.

The wheel unit 120 may be mounted on the mobility body. The wheel unit 120 may include a wheel 121. In addition, the wheel unit 120 may include at least one of a wheel axle and a gear, but is not limited thereto, and may include any device capable of moving the mobility.

The chain unit 130 may connect the pedal unit 110 and the wheel unit 120. For example, the chain unit 130 may mechanically connect the pedal unit 110 and the wheel unit 120 to provide rotational power based on the driver's power (or pedal force) provided from the pedal unit 110 to the wheel unit 120.

The chain unit 130 may include a chain 131, but is not limited thereto, and may include any device capable of connecting the pedal unit 110 and the wheel unit 120.

Meanwhile, the mobility driving device 100 may not include a chain unit 130. That is, if the chain unit 130 is not included, the mobility driving device 100 may have a structure in which the pedal unit 110 and the wheel unit 120 are not connected by the chain unit 130, and a mobility of this structure may be referred to as chainless mobility.

Accordingly, the mobility driving device 100 according to the present embodiments may be at least one of a mobility driving device 100 in which a pedal unit 110 including a pedal 111 and a wheel unit 120 including a wheel 121 are connected by a chain unit 130 including a chain 131, and a mobility driving device 100 in which a pedal unit 110 including a pedal 111 and a wheel unit 120 including a wheel 121 are not connected by a chain unit 130 including a chain 131.

Here, a mobility driving device 100 in which a pedal unit 110 including a pedal 111 and a wheel unit 120 including a wheel 121 are not connected by a chain unit 130 including a chain 131 may be a mobility driving device 100 in which a pedal unit 110 including a pedal 111 and a wheel unit 120 including a wheel 121 are mechanically separated, and may also be expressed as a chainless mobility driving device or chainless mobility. Meanwhile, since the components included in the pedal unit 110, the wheel unit 120, and the chain unit 130 can use known devices, it will be omitted detailed descriptions of the components included in the pedal unit 110, the wheel unit 120, and the chain unit 130) for the sake of clarity of explanation below.

The mobility driving assist device 200 may be connected to the mobility driving device 100. The mobility driving assist device 200 may assist the mobility driving device 100. That is, the mobility driving assist device 200 may be a device which assists the driving of the mobility driving device 100, and may assist the driving of the mobility driving device 100 so that the mobility driving device 100 can move the mobility, or may assist the driving of the mobility driving device 100 so that the mobility driving device 100 can provide the pedal feel to the driver.

The mobility driving assist device 200 may include at least one of a first driving assist device 210, a second driving assist device 220, a power supply device 230, and a sensor device 240. The first driving assist device 210, the second driving assist device 220, the power supply device 230, and the sensor device 240 may be connected to each other.

The first driving assist device 210 may be connected to a pedal unit 110 including a pedal 111. The first driving assist device 210 may assist the pedal unit 110 including the pedal 111. That is, the first driving assist device 210 may be a device which assists the driving of the pedal unit 110 including the pedal 111, and may assist the driving of the pedal 111 (or provide a pedal feel to the pedal) so that the pedal 111 can provide a pedal feel to the driver.

The second driving assist device 220 may be connected to a wheel unit 120 including a wheel 121. The second driving assist device 220 may assist the wheel unit 120 including the wheel 121. That is, the second driving assist device 220 may be a device which assists the driving of the wheel unit (120) including the wheel 121, and may assist the driving of the wheel 121 (or provide power or rotational force to the wheel) so that the wheel 121 can move the mobility.

The power supply device 230 may receive and store electric energy, or provide the stored electric energy.

For example, the power supply device 230 may be connected to the first driving assist device 210. The power supply device 230 may receive and store electric energy from the first driving assist device 210. In addition, the power supply device 230 may be connected to the second driving assist device 220. The power supply device 230 may provide the stored electric energy to the second driving assist device 220.

The power supply device 230 may include, but is not limited to, a battery, and may include any device capable of receiving and storing electrical energy or providing stored electrical energy.

Meanwhile, the electric energy used or described for the explanation of the present embodiments may include at least one of current, voltage, and power, but is not limited thereto, and may include anything related to electricity.

The sensor device 240 may measure or detect a mobility driving state to obtain mobility driving state information.

Here, the mobility driving state information may include at least one of pedal driving state information and wheel driving state information, but is not limited thereto, and may include any information related to mobility driving and/or state.

In particular, the pedal driving state information may include at least one of pedal rotation position information, pedal rotation speed information, first rotator rotation position information, first rotator rotation speed information, first current information, and first torque information, but is not limited thereto, and may include any information related to pedal driving and/or state.

In particular, the wheel driving state information may include at least one of wheel rotation position information, wheel rotation speed information, second rotator rotation position information, second rotator rotation speed information, second current information, and second torque information, but is not limited thereto, and may include any information related to wheel driving and/or status.

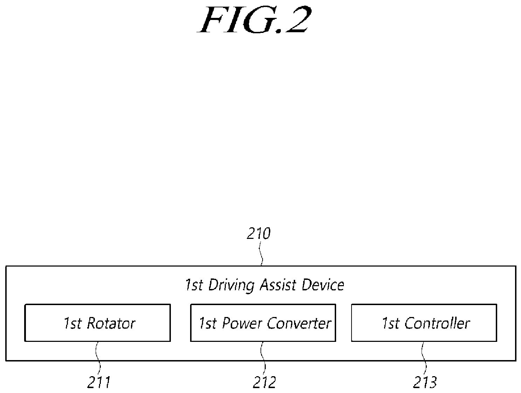

FIG. 2 is a diagram for explaining a first driving assist device according to the present embodiments.

Referring to FIG. 2, the first driving assist device 210 according to the present embodiments may include at least one of a first rotator 211, a first power converter 212, and the first controller 213, but is not limited thereto, and may include any device capable of assisting driving of the pedal unit 110 including the pedal 111. The first rotator 211, the first power converter 212, and the first controller 213 may be connected to each other.

The first rotator 211 or a first rotatory motor may be connected to the pedal unit 110 including the pedal 111. The first rotator 211 may assist the pedal unit 110 including the pedal 111.

For example, the first rotator 211 may generate electric energy based on the rotational force of the pedal 111. In addition, the first rotator 211 may provide a pedaling sensation or a pedaling feel to the pedal 111 based on the rotational force (or, repulsive force or rebound force).

The first rotator 211 may include a generator, but is not limited thereto, and may include any device capable of generating electric energy or provide a pedal feel or a pedaling sensation.

Here, the generator may also be referred to as an alternator.

The first power converter 212 may be connected to the first rotator 211, the first controller 213, and the power supply device 230.

For example, the operation of the first power converter 212 may be controlled by the first controller 213. The first power converter 212 may convert electric energy provided from the first rotator 211 into electric power and provide the converted electric power to the power supply device 230. The first power converter 212 may convert electric energy provided from the power supply device 230 into electric power and provide the converted electric power to the first rotator 211.

The first power converter 212 may include an inverter, but is not limited thereto, and may include any device capable of converting electric energy into electric power.

In particular, the first power converter 212 may include a bidirectional inverter.

The first controller 213 may be connected to the first power converter 212. The first controller 213 may control the operation of the first power converter 212.

For example, the first controller 213 may generate a first control signal based on the mobility driving state information provided from the sensor device 240, and control the operation of the first power converter 212 based on the first control signal.

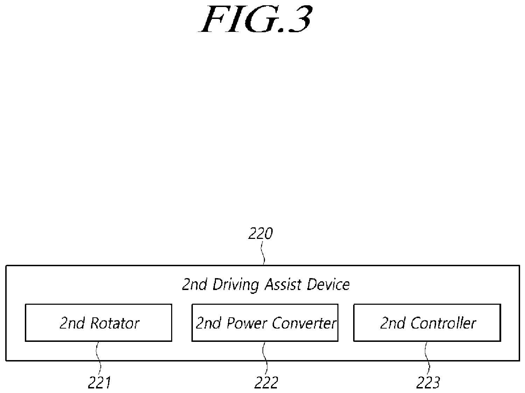

FIG. 3 is a diagram for explaining a second driving assist device according to the present embodiments.

Referring to FIG. 3, the second driving assist device 220 according to the present embodiments may include at least one of a second rotator 221, a second power converter 222, and a second controller 223, but is not limited thereto, and may include any device which assists driving of a wheel unit 120 including a wheel 121. The second rotator 221, the second power converter 222, and the second controller 223 may be connected to each other.

The second rotator 221 may be connected to the wheel unit 120 including the wheel 121. The second rotator 221 may assist the wheel unit 120 including the wheel 121.

For example, the second rotator 221 may rotate the wheel 121 based on the rotational force to move the mobility.

The second rotator 221 may include an electric motor, but is not limited thereto, and may include any device capable of rotating the wheel 121.

The second power converter 222 may be connected to the second rotator 221, the second controller 223, and the power supply device 230.

For example, the operation of the second power converter 222 may be controlled by the second controller 223. The second power converter 222 may convert electric energy provided from the power supply device 230 into power and provide it to the second rotator 221.

The second power converter 222 may include an inverter, but is not limited thereto, and may include any device capable of converting electrical energy into power.

In particular, the second power converter 222 may include a bidirectional inverter.

The second controller 223 may be connected to the second power converter 222. The second controller 223 may control the operation of the second power converter 222.

For example, the second controller 223 may generate a second control signal based on the mobility driving state information provided from the sensor device 240, and control the operation of the second power converter 222 based on the second control signal.

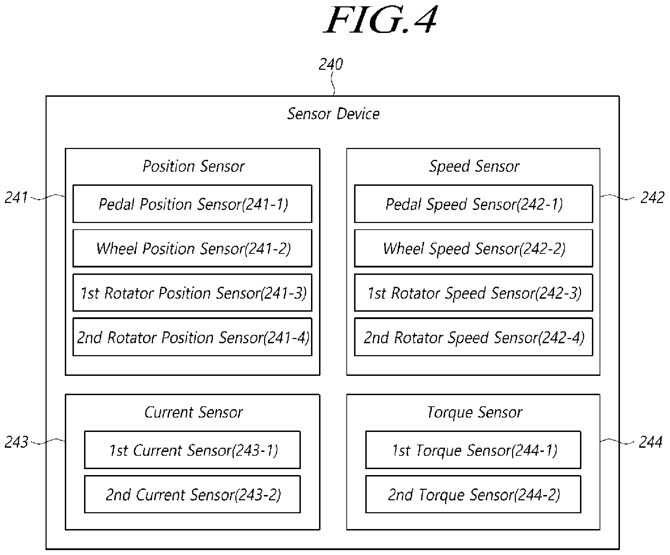

FIG. 4 is a diagram for explaining a sensor device according to the present embodiments.

Referring to FIG. 4, the sensor device 240 according to the present embodiments may include at least one of a position sensor 241, a speed sensor 242, a current sensor 243, and a torque sensor 244, but is not limited thereto, and may include any sensor which can measure a mobility driving state.

The position sensor 241 may obtain mobility driving position state information by measuring a position state related to mobility driving.

Here, the mobility driving position state information may include at least one of pedal rotation position information, wheel rotation position information, first rotator rotation position information, and second rotator rotation position information, but is not limited thereto, and may include any position information related to mobility driving.

A pedal position sensor 241-1 may obtain pedal rotation position information by measuring a pedal position state.

A wheel position sensor 241-2 may obtain wheel rotation position information by measuring the wheel position state.

The first rotator position sensor 241-3 may obtain first rotator rotation position information by measuring the first rotator rotation position status.

The second rotator position sensor 241-4 may obtain second rotator rotation position information by measuring the second rotator rotation position state.

The speed sensor 242 may obtain mobility driving speed state information by measuring a speed state related to mobility driving.

Here, the mobility driving speed state information may include at least one of pedal rotation speed information, wheel rotation speed information, first rotator rotation speed information, and second rotator rotation speed information, but is not limited thereto, and may include any speed information related to mobility driving.

A pedal speed sensor 242-1 may obtain pedal rotation speed information by measuring the pedal speed state.

A wheel speed sensor 242-2 may obtain wheel rotation speed information by measuring the wheel speed state.

A first rotator speed sensor 242-3 may obtain first rotator rotation speed information by measuring the first rotator rotation speed state.

A second rotator speed sensor 242-4 may obtain second rotator rotation speed information by measuring the second rotator rotation speed state.

The current sensor 243 may obtain mobility driving current state information by measuring a current state related to mobility driving.

Here, the mobility driving current state information may include at least one of the first current information and the second current information, but is not limited thereto, and may include any current information related to mobility driving.

A first current sensor 243-1 may obtain the first current information by measuring the current state related to the first rotator 211. For example, the first current sensor 243-1 may be positioned between the first power converter 212 and the first rotator 211, and may obtain the first current information by measuring the current state between the first power converter 212 and the first rotator 211.

Here, the first current information may include current information obtained by measuring the current state between the first power converter 212 and the first rotator (211) as described above, but is not limited thereto, and may include any current information capable of representing the current state related to the first rotator 211.

A second current sensor 243-2 may obtain second current information by measuring the current state related to the second rotator 221. For example, the second current sensor 243-2 may be positioned between the second power converter 222 and the second rotator 221, and may obtain second current information by measuring the current between the second power converter 222 and the second rotator 221.

Here, the second current information may include current information obtained by measuring the current state between the second power converter 222 and the second rotator 221 as described above, but is not limited thereto, and may include any current information which represents the current state related to the second rotator 221.

The torque sensor 244 may obtain mobility driving torque state information by measuring the torque state related to mobility driving.

Here, the mobility driving torque state information may include at least one of a first torque information and a second torque information, but is not limited thereto, and may include any torque information related to mobility driving.

A first torque sensor 244-1 may obtain the first torque information by measuring the torque state related to the first rotator 211. For example, the first torque sensor 244-1 may be located on and/or around the first rotator 211 and may measure a first rotator torque to obtain the first torque information.

Here, the first torque information may include torque information obtained by measuring the torque state on and/or around the first rotator 211 as described above, but is not limited thereto, and may include any torque information which represents the torque status related to the first rotator 211.

A second torque sensor 244-2 may obtain the second torque information by measuring the torque state related to the second rotator 221. For example, the second torque sensor 244-2 may be positioned on and/or around the second rotator 221 to measure a second rotator torque and obtain the second torque information.

Here, the second torque information may include torque information obtained by measuring the torque state by being positioned on and/or around the second rotator 221 as described above, but is not limited thereto, and may include any torque information indicating the torque state related to the second rotator 221.

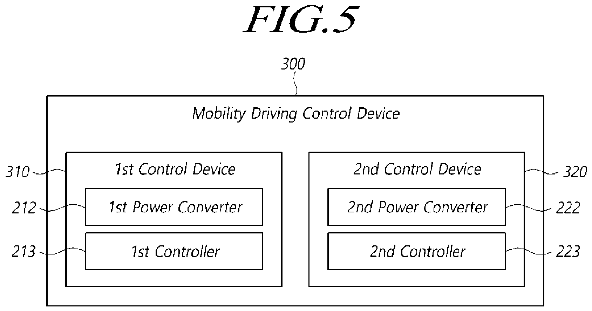

FIG. 5 is a diagram for explaining a mobility driving control device according to the present embodiments.

Referring to FIG. 5, the mobility driving control device 300 according to the present embodiments may control the first rotator 211 so as to assist the pedal unit 110 including the pedal 111 and mechanically separated from the wheel unit 120 including the wheel 121 capable of moving the mobility.

The mobility driving control device 300 may determine a final torque value based on at least one of a virtual elastic body torque value, a rebound torque value, and a damping torque value determined based on the pedal driving state information and the wheel driving state information, so that the pedal feel is provided to the pedal 111 through the first rotator 211 controlled based on the final torque value.

Specifically, the mobility driving control device 300 according to the present embodiments may include the first control device 310 and the second control device 320. The first control device 310 and the second control device 320 may be connected to each other.

The first control device 310 may control the first rotator 211.

The first control device 310 may include at least one of the first power converter 212 and the first controller 213, but is not limited thereto, and may include any component capable of controlling the first rotator 211. The first power converter 212 and the first controller 213 may be connected to each other.

The first controller 213 may determine the final torque value based on at least one of the virtual elastic body torque value, the rebound torque value, and the damping torque value determined based on the pedal driving state information and the wheel driving state information, so that the pedal feel is provided to the pedal through the first rotator 211 controlled based on the final torque value.

That is, the first controller 213 may determine at least one of the virtual elastic body torque value, the rebound torque value, and the damping torque value based on the pedal driving state information and the wheel driving state information. The first controller 213 may determine the final torque value based on at least one of the virtual elastic body torque value, the rebound torque value, and the damping torque value.

Here, the final torque value may be a base value or reference value for controlling the first rotator 211, and may be directly or indirectly used to control the first rotator 211. Accordingly, the first rotator 211 may be controlled based on the final torque value, and the first rotator 211 controlled based on the final torque value may provide a pedal feel or a pedaling sensation to the pedal 111.

According to the above, the mobility driving control device according to the present embodiments may include the first control device 310 for controlling the first rotator 211 so as to assist a pedal unit 110 including a pedal 111 and mechanically separated from a wheel unit 120 including a wheel 121 for moving the mobility. The first control device 310 may include a first controller 213, and the first controller 213 may determine the final torque value based on at least one of a virtual elastic body torque value, a rebound torque value, and a damping torque value determined based on pedal driving state information and wheel driving state information, so that a pedal feel is provided to the pedal 111 through the first rotator 211 controlled based on the final torque value.

Here, the virtual elastic body torque value may be a value corresponding to a virtual restoring force for a virtual elastic body which virtually connects a wheel unit 120 including a wheel 121 and a pedal unit 110 including a pedal 111.

Specifically, an elastic body may mean an object having the property of returning to its original shape if the force is removed from a state in which its shape has been deformed by an external force. Such an elastic body may include at least one of a spring and a rubber band, but is not limited thereto, and may include any object having the property of returning to its original shape when the force is removed from a state in which its shape has been deformed by an external force.

In particular, an elastic body may have restoring force (or, elasticity or elastic force).

Accordingly, the virtual elastic body may be an elastic body virtually connected to the wheel unit 120 including the wheel 121 and the pedal unit 110 including the pedal 111 so as to providing the effect when the above-described elastic body is directly connected to the wheel unit 120 including the wheel 121 and the pedal unit 110 including the pedal 111.

Therefore, the virtual elastic body torque value may be a value corresponding to a virtual restoring force for the virtual elastic body, and may correspond to the restoring force for the elastic body when directly connected to the wheel unit 120 including the wheel 121 and the pedal unit 110 including the pedal 111.

The first controller 213 may generate a first control signal based on the final torque value. The first controller 213 may control the first power converter 212 based on the first control signal. The first power converter 212 may convert electric energy provided from the power supply device 230 into electric power, and provide it to the first rotator 211 by the control of the first controller 213. The first rotator 211 may provide a pedal feel to the pedal 111. As described above, the first rotator 211 may be controlled based on the final torque value, and the first rotator 211 controlled based on the final torque value can provide a pedal feel to the pedal 111.

Referring to FIG. 5 again, the mobility driving control device 300 according to the present embodiments may control the second rotator 221 so as to assist the wheel unit 120 including the wheel 121 for moving the mobility and mechanically separated from the pedal device 110 including the pedal 111.

The mobility driving control device 300 may determine a second torque value based on the mobility driving state information so as for the wheel 121 to be moved through the second rotator 221 controlled based on the second torque value.

Here, the mobility driving state information may include at least one of the pedal driving state information and the wheel driving state information.

Specifically, the second control device 320 may control the second rotator 221.

The second control device 320 may include, but is not limited to, at least one of the second power converter 222 and the second controller 223, and may include any device capable of controlling the second rotator 221. The second power converter 222 and the second controller 223 may be connected to each other.

The second controller 223 may determine the second torque value based on the pedal driving state information and the wheel driving state information so that the wheel 121 is moved through the second rotator 221 controlled based on the second torque value.

That is, the second controller 223 may determine the second torque value based on the pedal driving state information and the wheel driving state information.

Here, the second torque value may be a base value or, reference value for controlling the second rotator 221, and may be directly or indirectly used to control the second rotator 221. Accordingly, the second rotator 221 may be controlled based on the second torque value, and the second rotator 221 controlled based on the second torque value can move the wheel 121.

As described above, the mobility driving control device 300 according to the present embodiments may include a second control device 320 including a second rotator 221 which assists a wheel unit 120 including a wheel 121 for moving the mobility and mechanically separated from a pedal unit 110 including a pedal 111. The second control device 320 may include a second controller 223, and the second controller 223 may determine a second torque value based on mobility driving state information (for example, pedal driving state information and wheel driving state information) so that the wheel 121 is moved through the second rotator 221 controlled based on the second torque value.

The second controller 223 may generate a second control signal based on the second torque value. The second controller 223 may control the second power converter 222 based on the second control signal. The second power converter 222 may convert electric energy provided from the power supply device 230 into electric power and provide it to the second rotator 221 by the control of the second controller 223. The second rotator 221 may move the wheel 121. As described above, the second rotator 221 may be controlled based on the second torque value, and the second rotator 221 controlled based on the second torque value can move the wheel 121.

Meanwhile, the mobility driving control device 300 may include an electronic control unit (ECU), but is not limited thereto, and may include any control device or system capable of being electronically controlled.

Accordingly, the first control device 310 may be referred to as the first ECU, and the second control device 320 may be referred to as the second ECU.

In addition, the first controller 213 and the second controller 223 may include a microcontroller (MCU), but are not limited thereto, and may include any device or computer capable of processing (or executing or operating) a program.

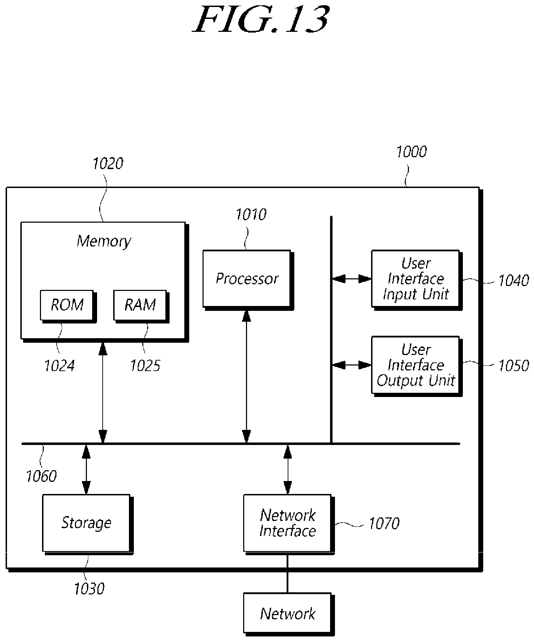

Here, the first controller 213 and the second controller 223 will be described in detail in the computer system of FIG. 13 described below (i.e., the computer system of FIG. 13 described below may be applied).

In addition, the first power converter 212 and the second power converter 222 have been described as being included in the first control device 310 and the second control device 320, respectively, but are not limited thereto, and may be configured separately from the first control device 310 and the second control device 320.

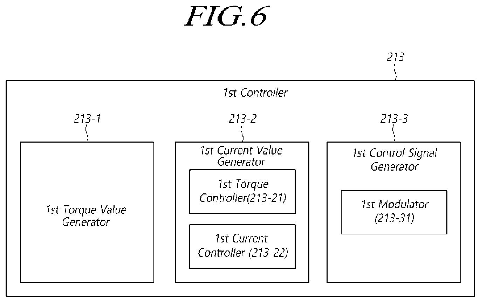

FIG. 6 is a diagram for explaining a first controller according to the present embodiments.

Referring to FIG. 6, the first controller 213 according to the present embodiments may determine a final torque value based on mobility driving state information, and generate a first control signal based on the final torque value.

Here, the mobility driving state information may include pedal driving state information and wheel driving state information.

Specifically, the first controller 213 may include at least one of a first torque value generator 213-1, a first current value generator 213-2, and a first control signal generator 213-3. The first torque value generator 213-1, the first current value generator 213-2, and the first control signal generator 213-3 may be connected to each other.

The first torque value generator 213-1 may determine the final torque value based on the mobility driving state information.

For example, the first torque value generator 213-1 may determine the final torque value based on the pedal driving state information and the wheel driving state information. That is, the first torque value generator 213-1 may determine at least one of the virtual elastic body torque value, the rebound torque value, and the damping torque value based on the pedal driving state information and the wheel driving state information. The first torque value generator 213-1 may determine the final torque value based on at least one of the virtual elastic body torque value, the rebound torque value, and the damping torque value that is determined.

Here, the final torque value may be referred to as a first torque value.

The first current value generator 213-2 may be connected to the first torque value generator 213-1. The first current value generator 213-2 may receive the final torque value from the first torque value generator 213-1. The first current value generator 213-2 may generate a first current value based on the final torque value.

For example, the first current value generator 213-2 may generate the first current value by performing at least one of torque control and current control for the final torque value.

That is, the first current value generator 213-2 may include at least one of a first torque controller 213-21 and a first current controller 213-22.

Here, each of the first torque controller 213-21 and the first current controller 213-22 may include at least one of a proportional (P) controller, an integral (I) controller, and a differential (D) controller.

The first torque controller 213-21 may perform torque control for a final torque value based on at least one of the proportional (P) controller, the integral (I) controller, and the differential (D) controller, and generate a first reference current value.

Here, the first torque controller 213-21 may be provided with a fed-back torque value of the first rotator (or, the first-1 torque value)

Accordingly, the first torque controller 213-21 may determine a difference between the final torque value and the fed-back torque value of the first rotator (or, the first-1 torque value), and perform torque control based on the torque difference value using at least one of a proportional (P) controller, an integral (I) controller, and a differential (D) controller, thereby generating a first reference current value.

Here, the fed-back torque value of the first rotator (or, the first-1 torque value) may be a value calculated by at least one of a first torque information measured by the first torque sensor 244-1 and a first current information measured by the first current sensor 243-1.

For example, the fed-back torque value (or, first-1 torque value) of the first rotator 211 may be a torque value included in the first torque information measured by the first torque sensor 244-1. In addition, the fed-back torque value (or, first-1 torque value) of the first rotator may be a value obtained by multiplying a torque constant by a current value included in the first current information measured by the first current sensor 243-1.

The first current controller 213-22 may perform current control for the first reference current value based on at least one of a proportional (P) controller, an integral (I) controller, and a differential (D) controller, thereby generating a first current value.

Here, the first current controller 213-22 may receive a current value (or, the first-1 current value) provided to the fed-back first rotator 211.

Accordingly, the first current controller 213-22 may determine the difference between the first reference current value and the current value (or, the first-1 current value) provided to the fed-back first rotator 211, and perform current control based on the current difference value by using at least one of a proportional (P) controller, an integral (I) controller, and a differential (D) controller, thereby generating the first current value.

Here, the current value (or, the first-1 current value) provided to the fed-back first rotator 211 may be a value calculated by at least one of a first torque information measured by the first torque sensor 244-1 and a first current information measured by the first current sensor 243-1.

For example, the current value (or, first-1 current value) provided to the fed-back first rotator 211 may be a current value included in the first current information measured by the first current sensor 243-1. In addition, the current value (or, first-1 current value) provided to the fed-back first rotator 211 may be a value obtained by dividing the torque value included in the first torque information measured from the first torque sensor 244-1 by a torque constant.

Meanwhile, if only the first torque controller 213-21 is included in the first current value generator 213-2, the first reference current value of the first torque controller 213-21 may be the first current value.

Meanwhile, if only the first current controller 213-22 is included in the first current value generator 213-2, the first reference current value of the first current controller 213-22 may be the final torque value. More precisely, the first reference current value of the first current controller 213-22 may be a value obtained by dividing the final torque value by a torque constant.

The first control signal generator 213-3 may be connected to the first current value generator 213-2. The first control signal generator 213-3 may receive the first current value from the first current value generator 213-2. The first control signal generator 213-3 may generate the first control signal based on the first current value.

For example, the first control signal generator 213-3 may perform modulation based on the first current value to generate the first control signal.

That is, the first control signal generator 213-3 may include a first modulator 213-31.

Here, the first modulator 213-31 may include a pulse width modulator (PWM), but is not limited thereto, and may include any modulator or modulation method capable of modulating the first current value to generate the first control signal.

The first modulator 213-31 may perform PWM based on the first current value to generate the first control signal.

Here, the first control signal may be a signal for controlling the first power converter 212.

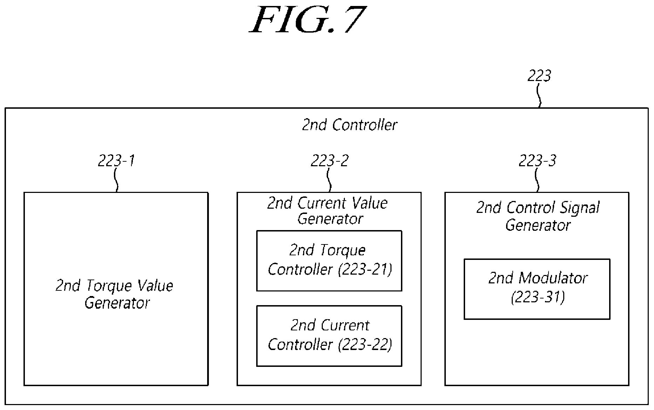

FIG. 7 is a diagram for explaining a second controller according to the present embodiments.

Referring to FIG. 7, the second controller 223 according to the present embodiments may determine a second torque value based on mobility driving state information, and generate a second control signal based on the second torque value.

Here, the mobility driving state information may include pedal driving state information and wheel driving state information.

Specifically, the second controller 223 may include at least one of a second torque value generator 223-1, a second current value generator 223-2, and a second control signal generator 223-3. The second torque value generator 223-1, the second current value generator 223-2, and the second control signal generator 223-3 may be connected to each other.

The second torque value generator 223-1 may determine the second torque value based on the mobility driving state information. For example, the second torque value generator 223-1 may determine the second torque value based on the pedal driving state information and the wheel driving state information.

According to one embodiment, the second torque value generator 223-1 may determine the second torque value based on one of the pedal rotation position value and the first rotator rotation position value, and one of the wheel rotation position value and the second rotator rotation position value.

In one example, the second torque value generator 223-1 may determine the second torque value based on the pedal rotation position value and the wheel rotation position value.

In another example, the second torque value generator 223-1 may determine the second torque value based on the pedal rotation position value and the second rotator rotation position value.

In another example, the second torque value generator 223-1 may determine the second torque value based on the first rotator rotation position value and the wheel rotation position value.

In another example, the second torque value generator 223-1 may determine the second torque value based on the first rotator rotation position value and the second rotator rotation position value.

Here, the second torque value generator 223-1 may determine the position difference value between one of the pedal rotation position value and the first rotator rotation position value and one of the wheel rotation position value and the second rotator rotation position value.

Here, the wheel rotation position value and the second rotator rotation position value may be values (or multiplied values) reflecting a gear ratio. In particular, the gear ratio may mean the number of times the wheel rotates when the pedal rotates once.

The second torque value generator 223-1 may determine the second torque value by performing position control based on the position difference value.

That is, the second torque value generator 223-1 may include a second position controller.

Here, the second position controller may include at least one of a proportional (P) controller, an integral (I) controller, and a differential (D) controller.

The second position controller may perform position control for the position difference value based on at least one of an integral (I) controller and a differential (D) controller, thereby generating the second torque value.

According to other embodiments, the second torque value generator 223-1 may determine the second torque value based on one of the pedal rotation speed value and the first rotator rotation speed value, and one of the wheel rotation speed value and the second rotator rotation speed value.

In one example, the second torque value generator 223-1 may determine the second torque value based on the pedal rotation speed value and the wheel rotation speed value.

In another example, the second torque value generator 223-1 may determine the second torque value based on the pedal rotation speed value and the second rotator rotation speed value.

In another example, the second torque value generator 223-1 may determine the second torque value based on the first rotator rotation speed value and the wheel rotation speed value.

In another example, the second torque value generator 223-1 may determine the second torque value based on the first rotator rotation speed value and the second rotator rotation speed value.

Here, the second torque value generator 223-1 may determine the speed difference value between one of the pedal rotation speed value and the first rotator rotation speed value and one of the wheel rotation speed value and the second rotator rotation speed value.

Here, the wheel rotation speed value and the second rotator rotation speed value may be values (or multiplied values) reflecting a gear ratio. In particular, the gear ratio may mean the number of times the wheel rotates when the pedal rotates once.

The second torque value generator 223-1 may determine the second torque value by performing speed control on the speed difference value.

That is, the second torque value generator 223-1 may include a second speed controller.

Here, the second speed controller may include at least one of a proportional (P) controller, an integral (I) controller, and a differential (D) controller.

The second speed controller may perform speed control for a speed difference value by using at least one of an integral (I) controller and a differential (D) controller, to generate a second torque value.

According to other embodiments, the second torque value generator 223-1 may determine the second torque value based on one of a pedal rotation position value and a first rotator rotation position value, one of a wheel rotation position value and a second rotator rotation position value; and one of a pedal rotation speed value and a first rotator rotation speed value, and one of a wheel rotation speed value and a second rotator rotation speed value.

Here, the second torque value generator 223-1 may determine the position difference value between one of the pedal rotation position value and the first rotator rotation position value and one of the wheel rotation position value and the second rotator rotation position value.

Here, the second torque value generator 223-1 may determine the speed difference value between one of the pedal rotation speed value and the first rotator rotation speed value and one of the wheel rotation speed value and the second rotator rotation speed value.

The second torque value generator 223-1 may perform position control and speed control based on the position difference value and the speed difference value to determine the second torque value.

For example, the second torque value generator 223-1 may perform position control for the position difference value to generate a position control result value, and perform speed control for the position control result value and the speed difference value to determine the second torque value.

Here, the position control result value may include a second reference speed value.

That is, the second torque value generator 223-1 may perform position control on the position difference value based on at least one of the integral (I) controller and the differential (D) controller, so as to generate a second reference speed value, and perform speed control for a value based on the second reference speed value and the speed difference value by using at least one of the integral (I) controller and the differential (D) controller, thereby determining the second torque value. The value based on the second reference speed value and the speed difference value may be a value obtained by adding the second reference speed value and the speed difference value.

In addition, the second torque value generator 223-1 may determine the second torque value by performing position control and speed control based on the position difference value, the pedal rotation speed value, and one of the first rotator rotation speed values.

For example, the second torque value generator 223-1 may perform position control based on the position difference value to generate a position control result value, and perform speed control based on the position control result value and one of the pedal rotation speed value and the first rotator rotation speed value to determine the second torque value.

Here, the position control result value may include a second reference speed value.

That is, the second torque value generator 223-1 may perform position control on the position difference value by using at least one of the integral (I) controller and the differential (D) controller, so as to generate the second reference speed value, and perform speed control based on the second reference speed value and one of the pedal rotation speed value and the first rotator rotation speed value by using at least one of the integral (I) controller and the differential (D) controller, so as to determine the second torque value. The value based on the second reference speed value and one of the pedal rotation speed value and the first rotator rotation speed value may be a value obtained by subtracting the second reference speed value from one of the pedal rotation speed value and the first rotator rotation speed value.

The second current value generator 223-2 may be connected to the second torque value generator 223-1. The second current value generator 223-2 may receive the second torque value from the second torque value generator 223-1. The second current value generator 223-2 may generate the second current value based on the second torque value.

For example, the second current value generator 223-2 may generate the second current value by performing at least one of torque control and current control.

That is, the second current value generator 223-2 may include at least one of a second torque controller 223-21 and a second current controller 223-22.

Here, each of the second torque controller 223-21 and the second current controller 223-22 may include at least one of a proportional (P) controller, an integral (I) controller, and a differential (D) controller.

The second torque controller 223-21 may perform torque control for the second torque value based on at least one of the proportional (P) controller, the integral (I) controller, and the differential (D) controller, thereby generating a second reference current value.

Here, the second torque controller 223-21 may be provided with a torque value of the fed-back second rotator.

Accordingly, the second torque controller 223-21 may determine a torque difference value between the second torque value and the torque value of the fed-back second rotator, and performs torque control for the torque difference value by using at least one of a proportional (P) controller, an integral (I) controller, and a differential (D) controller, thereby generating a second reference current value.

Here, the torque value of the fed-back second rotator may be a value calculated by at least one of the second torque information measured by the second torque sensor 244-2 and the second current information measured by the second current sensor 243-2.

For example, the torque value of the fed-back second rotator may be a torque value included in the second torque information measured by the second torque sensor 244-2. In addition, the torque value of the fed-back second rotator may be a value obtained by multiplying a torque constant by a current value included in the second current information measured by the second current sensor 243-2.

The second current controller 223-22 may perform current control for the second reference current value based on at least one of a proportional (P) controller, an integral (I) controller, and a differential (D) controller, to generate the second current value.

Here, the second current controller 223-22 may receive a current value provided to the fed-back second rotator.

Accordingly, the second current controller 223-22 may determine a current difference value between the second reference current value and the current value provided to the fed-back second rotator 221, and perform current control for the current difference value by using at least one of a proportional (P) controller, an integral (I) controller, and a differential (D) controller, thereby generating a second current value.

Here, the current value provided to the fed-back second rotator 221 may be a value calculated by at least one of the second torque information measured by the second torque sensor 244-2 and the second current information measured by the second current sensor 243-2.

For example, the current value provided to the fed-back second rotator 221 may be a current value included in the second current information measured by the second current sensor 243-2. In addition, the current value provided to the fed-back second rotator 221 may be a value obtained by dividing the torque value included in the second torque information measured by the second torque sensor 244-2 by a torque constant.

Meanwhile, if only the second torque controller 223-21 is included in the second current value generator 223-2, the second reference current value of the second torque controller 223-21 may be the second current value.

Meanwhile, if only the second current controller 223-22 is included in the second current value generator 223-2, the second reference current value of the second current controller 223-22 may be the second torque value. More precisely, the second reference current value of the current controller may be a value obtained by dividing the second torque value by a torque constant.

The second control signal generator 223-3 may be connected to the second current value generator 223-2. The second control signal generator 223-3 may receive the second current value from the second current value generator 223-2. The second control signal generator 223-3 may generate the second control signal based on the second current value.

For example, the second control signal generator 223-3 may perform modulation based on the second current value to generate the second control signal.

That is, the second control signal generator 223-3 may include a second modulator 223-31.

Here, the second modulator 223-31 may include a pulse width modulator (PWM modulator), but is not limited thereto, and may include any modulator or modulation method which can modulate the second current value to generate the second control signal.

The second modulator 223-31 may perform PWM based on the second current value to generate the second control signal.

Here, the second control signal may be a signal for controlling the second power converter 222.

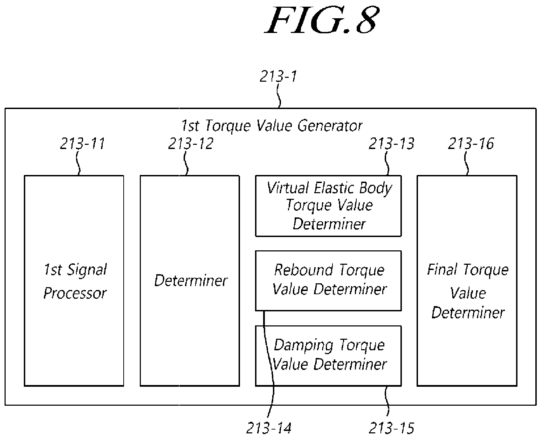

FIG. 8 is a diagram for explaining a first torque value generator according to the present embodiments.

Referring to FIG. 8, a first torque value generator 213-1 according to the present embodiments may include at least one of a first signal processor 213-11, a determiner 213-12, a virtual elastic body torque value determiner 213-13, a rebound torque value determiner 213-14, a damping torque value determiner 213-15, and a final torque value determiner 213-16. The first signal processor 213-11, the determiner 213-12, the virtual elastic body torque value determiner 213-13, the rebound torque value determiner 213-14, the damping torque value determiner 213-15, and the final torque value determiner 213-16 may be connected to each other.

The first torque value generator 213-1 according to the present embodiments may include a first signal processor 213-11. The first signal processor 213-11 may process the mobility driving state information to generate a mobility driving state value.

Here, signal processing refers to processing a signal to extract a meaningful or desired signal, and may include any algorithm which can process the mobility driving state information to extract a mobility driving state value.

For example, the first signal processor 213-11 may process the pedal driving state information and the wheel driving state information to generate a pedal driving state value and a wheel driving state value.

Specifically, the first signal processor 213-11 may be connected to a sensor device 240. The first signal processor 213-11 may receive at least one of the following information from the sensor device 240: pedal rotation position information, pedal rotation speed information, first rotator rotation position information, first rotator rotation speed information, first current information, first torque information, wheel rotation position information, wheel rotation speed information, second rotator rotation position information, second rotator rotation speed information, second current information, and second torque information. However, the present disclosure is not limited thereto, and any information may be received as long as it is mobility driving state information.

For example, the first signal processor 213-11 may perform signal processing on the pedal rotation position information to generate a pedal rotation position value. In addition, the first signal processor 213-11 may perform signal processing (for example, differential signal processing) on the pedal rotation position value to generate a pedal rotation speed value.

The first signal processor 213-11 may generate a pedal rotation speed value by signal processing the pedal rotation speed information. In addition, the first signal processor 213-11 may generate a pedal rotation position value by signal processing (for example, integral signal processing) the pedal rotation speed value.

The first signal processor 213-11 may generate a first rotator rotation position value by signal processing the first rotator rotation position information. In addition, the first signal processor 213-11 may generate a first rotator rotation speed value by signal processing (for example, differential signal processing) the first rotator rotation position value.

The first signal processor 213-11 may generate a first rotator rotation speed value by signal processing the first rotator rotation speed information. In addition, the first signal processor 213-11 may generate the first rotator rotation position value by signal processing (for example, integral signal processing) the first rotator rotation speed value.

Meanwhile, the first rotator rotation position value may correspond to the pedal rotation position value. That is, the pedal rotation position may be expressed as a first rotator rotation position value or a pedal rotation position value.

Meanwhile, the first rotator rotation speed value may correspond to the pedal rotation speed value. That is, the pedal rotation speed may be expressed as the first rotator rotation speed value or the pedal rotation speed value.

The first signal processor 213-11 may signal-process the first current information to generate the first-1 current value. The first signal processor 213-11 may signal-process the first-1 current value (for example, multiplying the first-1 current value by a torque constant) to generate the first-1 torque value.

The first signal processor 213-11 may signal-process the first torque information to generate the first-1 torque value. In addition, the first signal processor 213-11 may generate the first-1 current value by signal processing the first-1 torque value (for example, dividing the first-1 torque value by a torque constant).

The first signal processor 213-11 may generate the wheel rotation position value by signal processing the wheel rotation position information. The first signal processor 213-11 may generate the wheel rotation speed value by signal processing (for example, differential signal processing) the wheel rotation position value.

The first signal processor 213-11 may generate the wheel rotation speed value by signal processing the wheel rotation speed information. The first signal processor 213-11 may generate the wheel rotation position value by signal processing (for example, integral signal processing) the wheel rotation speed value.

The first signal processor 213-11 may generate a second rotator rotation position value by signal processing the second rotator rotation position information. In addition, the first signal processor 213-11 may generate a second rotator rotation speed value by signal processing (for example, differential signal processing) the second rotator rotation position value.

The first signal processor 213-11 may generate a second rotator rotation speed value by signal processing the second rotator rotation speed information. In addition, the first signal processor 213-11 may generate a second rotator rotation position value by signal processing (for example, integral signal processing) the second rotator rotation speed value.

Meanwhile, the second rotator rotation position value may correspond to the wheel rotation position value. That is, the wheel rotation position may be expressed by second rotator rotation position value or wheel rotation position value.

Meanwhile, the second rotator rotation speed value may correspond to the wheel rotation speed value. That is, the wheel rotation speed may be expressed as a second rotator rotation speed value or a wheel rotation speed value.

The first signal processor 213-11 may perform signal processing on the second current information to generate the second-1 current value. The first signal processor 213-11 may perform signal processing on the second -1 current value (for example, multiplying the second-1 current value by a torque constant) to generate the second-1 torque value.

The first signal processor 213-11 may generate the second -1 torque value by signal processing the second torque information. In addition, the first signal processor 213-11 may generate the second-1 current value by signal processing the second-1 torque value (for example, dividing the second-1 torque value by a torque constant).

Meanwhile, the function of the above-described first signal processor 213-11 may also be included in the second torque value generator 223-1 of the second controller 223.

The first torque value generator 213-1 according to the present embodiments may include at least one of a virtual elastic body torque value determiner 213-13, a rebound torque value determiner 213-14, and a damping torque value determiner 213-15.

The virtual elastic body torque value determiner 213-13 may determine the virtual elastic body torque value.

Here, the virtual elastic body torque value may mean a torque value in a direction of narrowing a reference position of the pedal. For example, the virtual elastic body torque value may mean a torque value in direction that narrows a rotational position difference between the pedal and the wheel.

The rebound torque value determiner 213-14 may determine the rebound torque value.

Here, the rebound torque value may mean a torque value opposite to the pedal's (or, mobility's) driving direction. This rebound torque value may be referred to as a counter torque (value).

The damping torque value determiner 213-15 may determine the damping torque value.

Here, the damping torque value may mean a torque value acting in the opposite direction to the virtual elastic body torque's forward direction. This damping torque value may be proportional to the pedal's reverse rotation speed.

Here, each of the virtual elastic body torque value determiner 213-13, the rebound torque value determiner 213-14, and the damping torque value determiner 213-15 may determine the virtual elastic body torque value, the rebound torque value, and the damping torque value based on the mobility driving state information.

In particular, the virtual elastic body torque value determiner 213-13, the rebound torque value determiner 213-14, and the damping torque value determiner 213-15 may determine the virtual elastic body torque value, the rebound torque value, and the damping torque value, respectively, based on the pedal driving state information and the wheel driving state information.

Continuing with reference to FIG. 8, the virtual elastic body torque value determiner 213-13 may determine the virtual elastic body torque value based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information.

Specifically, the virtual elastic body torque value determiner 213-13 may be connected to the first signal processor 213-11. The virtual elastic body torque value determiner 213-13 may receive the pedal rotation position value, the first rotator rotation position value, the wheel rotation position value, and the second rotator rotation position value from the first signal processor 213-11.

Here, the pedal rotation position value may be a value generated based on the pedal rotation position information or the pedal rotation speed information as described above.

Here, the first rotator rotation position value may be a value generated based on the first rotator rotation position information or the first rotator rotation speed information as described above.

In particular, as described above, the pedal rotation position value and the first rotator rotation position value may represent the rotation position of the pedal.

Here, the wheel rotation position value may be a value generated based on the wheel rotation position information or the wheel rotation speed information as described above.

Here, the second rotator rotation position value may be a value generated based on the second rotator rotation position information or the second rotator rotation speed information as described above.

In particular, as described above, the wheel rotation position value and the second rotator rotation position value may represent the rotation position of the wheel.

The virtual elastic body torque value determiner 213-13 may determine the virtual elastic body torque value based on one of the pedal rotation position value and the first rotator rotation position value, and one of the wheel rotation position value and the second rotator rotation position value.

In one example, the virtual elastic body torque value determiner 213-13 may determine the virtual elastic body torque value based on the pedal rotation position value and the wheel rotation position value.

In another example, the virtual elastic body torque value determiner 213-13 may determine the virtual elastic body torque value based on the pedal rotation position value and the second rotator rotation position value.

In another example, the virtual elastic body torque value determiner 213-13 may determine the virtual elastic body torque value based on the first rotator rotation position value and the wheel rotation position value.

In another example, the virtual elastic body torque value determiner 213-13 may determine the virtual elastic body torque value based on the first rotator rotation position value and the second rotator rotation position value.

Here, the virtual elastic body torque value determiner 213-13 may determine the position difference value between one of the pedal rotation position value and the first rotator rotation position value and one of the wheel rotation position value and the second rotator rotation position value.

Here, the wheel rotation position value and the second rotator rotation position value may be a value (or a multiplied value) which reflects the gear ratio. In particular, the gear ratio can mean the number of times the wheel rotates when the pedal rotates once.

The virtual elastic body torque value determiner 213-13 may determine the virtual elastic body torque value based on the position difference value and a virtual elastic body coefficient.

In one example, the virtual elastic body torque value determiner 213-13 may determine the virtual elastic body torque value by multiplying the position difference value and the virtual elastic body coefficient.

In another example, the virtual elastic body torque value determiner 213-13 may determine the virtual elastic body torque value by multiplying the position difference value, the virtual elastic body coefficient, and the gear ratio.

Here, the virtual elastic body coefficient may include at least one of the virtual elastic body constant and the virtual elastic body variable. In particular, the virtual elastic body constant may mean a constant value that does not change. The virtual elastic body variable may mean a value that changes.

According to the above, the virtual elastic body torque value according to the present embodiments may be expressed as in Equation 1.

$$\text{Virtual elastic body torque value} = K1 \times \theta_{pedal} - K_{gear\ ratio} \times \theta_{wheel} \qquad \text{[Equation 1]}$$

Here, K1 is a virtual elastic coefficient, $\theta_{pedal}$ is a rotational position of the pedal, $\theta_{wheel}$ is a rotational position of the wheel, and $K_{gear\ ratio}$ may be a gear ratio.

Referring to FIG. 8 again, the rebound torque value determiner 213-14 may determine the rebound torque value based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information.

Specifically, the rebound torque value determiner 213-14 may be connected to the first signal processor 213-11. The rebound torque value determiner 213-14 may receive the pedal rotation position value, the first rotator rotation position value, the wheel rotation position value, the second rotator rotation position value, the pedal rotation speed value, the first rotator rotation speed value, the wheel rotation speed value, and the second rotator rotation speed value from the first signal processor 213-11.

Here, the pedal rotation position value, the first rotator rotation position value, the wheel rotation position value, and the second rotator rotation position value have been described in the virtual elastic body torque value determiner 213-13, so there will be omitted for the sake of clarity of explanation below.

Here, the pedal rotation speed value may be a value generated based on the pedal rotation speed information or the pedal rotation position information, as described above.

Here, the first rotator rotation speed value may be a value generated based on the first rotator rotation speed information or the first rotator rotation position information as described above.

In particular, as described above, the pedal rotation speed value and the first rotator rotation speed value may represent the rotation speed of the pedal.

Here, the wheel rotation speed value may be a value generated based on the wheel rotation speed information or the wheel rotation position information as described above.

Here, the second rotator rotation speed value may be a value generated based on the second rotator rotation speed information or the second rotator rotation position information as described above.

In particular, as described above, the wheel rotation speed value and the second rotator rotation speed value may represent the rotation speed of the wheel.

According to one embodiment, the rebound torque value determiner 213-14 may determine the rebound torque value based on one of the pedal rotation position value and the first rotator rotation position value, and one of the wheel rotation position value and the second rotator rotation position value.

In one example, the rebound torque value determiner 213-14 may determine the rebound torque value based on the pedal rotation position value and the wheel rotation position value.

In another example, the rebound torque value determiner 213-14 may determine the rebound torque value based on the pedal rotation position value and the second rotator rotation position value.

In another example, the rebound torque value determiner 213-14 may determine the rebound torque value based on the first rotator rotation position value and the wheel rotation position value.

In another example, the rebound torque value determiner 213-14 may determine the rebound torque value based on the first rotator rotation position value and the second rotator rotation position value.

Here, the rebound torque value determiner 213-14 may determine the position difference value between one of the pedal rotation position value and the first rotator rotation position value and one of the wheel rotation position value and the second rotator rotation position value.

Here, the wheel rotation position value and the second rotator rotation position value may be values (or multiplied values) which reflect the gear ratio. In particular, the gear ratio may mean the number of times the wheel rotates when the pedal rotates once.

The rebound torque value determiner 213-14 may determine the rebound torque value by performing position control based on the position difference value.

That is, the rebound torque value determiner 213-14 may include a first position controller.

Here, the first position controller may include at least one of a proportional (P) controller, an integral (I) controller, and a differential (D) controller.

The first position controller may perform position control on the position difference value by using at least one of an integral (I) controller and a differential (D) controller, to generate the rebound torque value.

According to other embodiments, the rebound torque value determiner 213-14 may determine the rebound torque value based on one of the pedal rotation speed value and the first rotator rotation speed value, and one of the wheel rotation speed value and the second rotator rotation speed value.

In one example, the rebound torque value determiner 213-14 may determine the rebound torque value based on the pedal rotation speed value and the wheel rotation speed value.

In another example, the rebound torque value determiner 213-14 may determine the rebound torque value based on the pedal rotation speed value and the second rotator rotation speed value.

In another example, the rebound torque value determiner 213-14 may determine the rebound torque value based on the first rotator rotation speed value and the wheel rotation speed value.

In another example, the rebound torque value determiner 213-14 may determine the rebound torque value based on the first rotator rotation speed value and the second rotator rotation speed value.

Here, the rebound torque value determiner 213-14 may determine the speed difference value between one of the pedal rotation speed value and the first rotator rotation speed value and one of the wheel rotation speed value and the second rotator rotation speed value.

Here, the wheel rotation speed value and the second rotator rotation speed value may be a value (or a multiplied value) which reflects the gear ratio. In particular, the gear ratio can mean the number of times the wheel rotates when the pedal rotates once.

The rebound torque value determiner 213-14 may perform speed control for the speed difference value to determine the rebound torque value.

That is, the rebound torque value determiner 213-14 may include a first speed controller.

Here, the first speed controller may include at least one of a proportional (P) controller, an integral (I) controller, and a differential (D) controller.

The first speed controller may perform speed control on a speed difference value by using at least one of an integral (I) controller and a differential (D) controller, to generate a rebound torque value.

According to other embodiments, the rebound torque value determiner 213-14 may determine a rebound torque value based on one of a pedal rotation position value and a first rotator rotation position value, one of a wheel rotation position value and a second rotator rotation position value; and one of a pedal rotation speed value and a first rotator rotation speed value, and one of a wheel rotation speed value and a second rotator rotation speed value.

Here, the rebound torque value determiner 213-14 may determine a position difference value between one of a pedal rotation position value and a first rotator rotation position value, and one of a wheel rotation position value and a second rotator rotation position value.

Here, the rebound torque value determiner 213-14 may determine the speed difference value between one of the pedal rotation speed value and the first rotator rotation speed value and one of the wheel rotation speed value and the second rotator rotation speed value.

The rebound torque value determiner 213-14 may determine the rebound torque value by performing position control and speed control based on the position difference value and the speed difference value.

For example, the rebound torque value determiner 213-14 may perform position control based on the position difference value to generate a position control result value, and perform speed control based on the position control result value and the speed difference value to determine the rebound torque value.

Here, the position control result value may include the first reference speed value.

That is, the rebound torque value determiner 213-14 may perform position control on the position difference value by using at least one of the integral (I) controller and the differential (D) controller, to generate the first reference speed value, and perform speed control on a value based on the first reference speed value and the speed difference value by using at least one of the integral (I) controller and the differential (D) controller, to determine the rebound torque value. The value based on the first reference speed value and the speed difference value may be a value obtained by adding the first reference speed value and the speed difference value.

In addition, the rebound torque value determiner 213-14 may perform position control and speed control based on the position difference value, the pedal rotation speed value, and one of the first rotator rotation speed values, to determine the rebound torque value.

For example, the rebound torque value determiner 213-14 may perform position control based on the position difference value to generate a position control result value, and perform speed control based on the position control result value and one of the pedal rotation speed value and the first rotator rotation speed value to determine the rebound torque value.

Here, the position control result value may include the first reference speed value.

That is, the rebound torque value determiner 213-14 may perform position control on the position difference value using at least one of the integral (I) controller and the differential (D) controller to generate a first reference speed value, and perform speed control for a value based on the first reference speed value and one of the pedal rotation speed value and the first rotator rotation speed value by using at least one of the integral (I) controller and the differential (D) controller to determine the rebound torque value. The value based on the first reference speed value and one of the pedal rotation speed value and the first rotator rotation speed value may be a value obtained by subtracting the first reference speed value from one of the pedal rotation speed value and the first rotator rotation speed value.

According to other embodiments, the rebound torque value determiner 213-14 may determine the rebound torque value based on the second torque value. Here, the rebound torque value determiner 213-14 may receive the second torque value from the second controller 223 (for example, the second torque value generator 223-1).

Continuing with reference to FIG. 8, the damping torque value determiner 213-15 may determine the damping torque value based on at least one of the pedal rotation position information, the pedal rotation speed information, the first rotator rotation position information, and the first rotator rotation speed information.

Specifically, the damping torque value determiner 213-15 may be connected to the first signal processor 213-11. The damping torque value determiner 213-15 may receive the pedal rotation speed value and/or the first rotator rotation speed value from the first signal processor 213-11.

The damping torque value determiner 213-15 may determine the damping torque value based on at least one of the pedal rotation speed value and the first rotator rotation speed value.

In one example, the damping torque value determiner 213-15 may determine the damping torque value based on the pedal rotation speed value.

In another example, the damping torque value determiner 213-15 may determine the damping torque value based on the first rotator rotation speed value.

In another example, the damping torque value determiner 213-15 may determine the damping torque value based on the pedal rotation speed value and the first rotator rotation speed value.

Here, the pedal rotation speed value may be a value generated based on the pedal rotation speed information or the pedal rotation position information as described above.

Here, the first rotator rotation speed value may be a value generated based on the first rotator rotation speed information or the first rotator rotation position information as described above.

Here, the pedal rotation speed value and the first rotator rotation speed value may represent the pedal rotation speed.

In particular, the damping torque value determiner 213-15 may determine the damping torque value based on at least one of the pedal rotation speed value and the first rotator rotation speed value so as for the pedal rotation speed to be amplified.

Here, the damping torque value may be a value in which the pedal rotation speed is amplified. This amplified pedal rotation speed value may be determined based on at least one of the pedal rotation speed value and the first rotator rotation speed value.

In other words, the damping torque value determiner 213-15 may determine the amplified pedal rotation speed value based on at least one of the pedal rotation speed value and the first rotator rotation speed value, and determine the amplified pedal rotation speed value as the damping torque value.

For example, the damping torque value determiner 213-15 may determine the damping torque value based on at least one of the pedal rotation speed value and the first rotator rotation speed value and a damping coefficient. That is, the damping torque value determiner 213-15 may determine an amplified value of the pedal rotation speed based on at least one of the pedal rotation speed value and the first rotator rotation speed value and the damping coefficient, and determine the amplified value of the pedal rotation speed as the damping torque value.

In one example, the damping torque value determiner 213-15 may determine an amplified pedal rotation speed value by multiplying the pedal rotation speed value and the damping coefficient, and may determine the amplified pedal rotation speed value as the damping torque value.

In another example, the damping torque value determiner 213-15 may determine an amplified pedal rotation speed value by multiplying the first rotator rotation speed value and the damping coefficient, and may determine the amplified pedal rotation speed value as the damping torque value.

In another example, the damping torque value determiner 213-15 may determine an amplified pedal rotation speed value by multiplying the pedal rotation speed value, the first rotator rotation speed value, and the damping coefficient, and may determine the amplified pedal rotation speed value as the damping torque value.

In addition, the damping torque value determiner 213-15 may determine the damping torque value by multiplying the pedal rotation speed value and the first rotator rotation speed value. That is, the damping torque value determiner 213-15 may determine the amplified pedal rotation speed value by multiplying the pedal rotation speed value and the first rotator rotation speed value, and determine the amplified pedal rotation speed value as the damping torque value.

In addition, the damping torque value determiner 213-15 may determine the damping torque value based on at least one of the power of the pedal rotation speed value and the power of the first rotator rotation speed value. That is, the damping torque value determiner 213-15 may determine the amplified pedal rotation speed value based on at least one of the power of the pedal rotation speed value and the power of the first rotator rotation speed value, and determine the amplified pedal rotation speed value as the damping torque value.

In one example, the damping torque value determiner 213-15 may determine the power of the pedal rotation speed value by squaring or repeatedly multiplying the pedal rotation speed value, and determine the power of the pedal rotation speed value, which is the amplified value of the pedal rotation speed, as the damping torque value.

In another example, the damping torque value determiner 213-15 may determine the power of the first rotator rotation speed value by squaring or repeatedly multiplying the first rotator rotation speed value, and determine the power of the first rotator rotation speed value, which is the amplified value of the pedal rotation speed, as the damping torque value.

In another example, the damping torque value determiner 213-15 may determine the power of the pedal rotation speed value by squaring or repeatedly multiplying the pedal rotation speed value, determine the power of the first rotator rotation speed value by squaring or repeatedly multiplying the first rotator rotation speed value, determine the amplified value of the pedal rotation speed by multiplying the power of the pedal rotation speed value and the power of the first rotator rotation speed value, and determine the amplified value of the pedal rotation speed as the damping torque value.

In addition, the damping torque value determiner 213-15 may determine the damping torque value based on at least one of the power of the pedal rotation speed value and the power of the first rotator rotation speed value, and a damping coefficient. That is, the damping torque value determiner 213-15 determines an amplified value of the pedal rotation speed based on at least one of the power of the pedal rotation speed value and the power of the first rotator rotation speed value and the damping coefficient, and may determine the amplified value of the pedal rotation speed as the damping torque value.

In one example, the damping torque value determiner 213-15 may determine the power value or an exponent value of the pedal rotation speed value by repeatedly multiplying the pedal rotation speed value, determines an amplified value of the pedal rotation speed value by multiplying the power value of the pedal rotation speed value and the damping coefficient, and may determine the amplified value of the pedal rotation speed as the damping torque value.

In another example, the damping torque value determiner 213-15 may determine a power value of the first rotator rotation speed value by repeatedly multiplying the first rotator rotation speed value, determine an amplified value of the pedal rotation speed by multiplying the power value of the first rotator rotation speed value by a damping coefficient, and determine the amplified value of the pedal rotation speed as a damping torque value.

In another example, the damping torque value determiner 213-15 may determine a power value of the pedal rotation speed value by repeatedly multiplying the pedal rotation speed value, determine a power value of the first rotator rotation speed value by repeatedly multiplying the first rotator rotation speed value, determine an amplified pedal rotation speed value by multiplying the power of the pedal rotation speed value, the power of the first rotator rotation speed value, and a damping coefficient, and determine the amplified pedal rotation speed value as a damping torque value.

Here, the damping coefficient may include at least one of a damping constant and a damping variable. In particular, the damping constant may mean a constant value which does not change. The damping variable may mean a changeable value.

Here, a power or a power value may include at least one of a square value, a cube value, ..., and an n-square value.

According to the above, the damping torque value according to the present embodiments may be expressed as in Equation 2.

[Equation 2]

$$\text{Damping torque value} = K2 \times (\omega_{pedal})^{K3}$$

Here, K2 is a damping coefficient, $\omega_{pedal}$ is a rotation speed of the pedal, and K3 may be an exponent of the power.

For example, K2 = 0.01, K3 = 3 may be set, In this case, the damping torque value may act as a value that converges to 0 when the driver artificially rotates the pedal in reverse under the condition where the virtual elastic body torque (value) operates, so that the driver may not feel any resistance to rotating the pedal in reverse, and the reverse rotation of the pedal cannot exceed the speed that the driver can artificially generate.

The first torque value generator 213-1 according to the present embodiments may include a final torque value determiner 213-16.

The final torque value determiner 213-16 may be connected to the virtual elastic body torque value determiner 213-13, the rebound torque value determiner 213-14, and the damping torque value determiner 213-15. The final torque value determiner 213-16 may receive the virtual elastic body torque value from the virtual elastic body torque value determiner 213-13. The final torque value determiner 213-16 may receive the rebound torque value from the rebound torque value determiner 213-14. The final torque value determiner 213-16 may receive the damping torque value from the damping torque value determiner 213-15.

The final torque value determiner 213-16 may determine the final torque value based on at least one of the virtual elastic body torque value, the rebound torque value, and the damping torque value.

For example, the final torque value determiner 213-16 may determine the virtual elastic body torque value as the final torque value. The final torque value determiner 213-16 may determine the rebound torque value as the final torque value. The final torque value determiner 213-16 may determine the damping torque value as the final torque value.

In addition, the final torque value determiner 213-16 may add the virtual elastic body torque value and the rebound torque value, and determine the added virtual elastic body torque value and the rebound torque value as the final torque value. The final torque value determiner 213-16 may add the virtual elastic body torque value and the damping torque value, and determine the added virtual elastic body torque value and the damping torque value as the final torque value. The final torque value determiner 213-16 may add the rebound torque value and the damping torque value, and determine the added rebound torque value and the damping torque value as the final torque value.

In addition, the final torque value determiner 213-16 may add the virtual elastic body torque value, the rebound torque value, and the damping torque value, and determine the added virtual elastic body torque value, the rebound torque value, and the damping torque value as the final torque value.

According to the above, the final torque value determiner 213-16 may include an adder. The adder may add at least two of the virtual elastic body torque value, the rebound torque value, and the damping torque value to determine the final torque value.

The first torque value generator 213-1 according to the present embodiments may include a determiner 213-12.

The determiner 213-12 may determine the mobility driving state.

Here, the mobility driving state may include a first driving state to a third driving state.

The first driving state may mean a state in which a virtual elastic body torque value is required, that is, a state in which a virtual elastic body torque value is to be determined and reflected in the final torque value.

The second driving state may mean a state in which a rebound torque value is required, that is, a state in which a rebound torque value is to be determined and reflected in the final torque value.

The third driving state may mean a state in which a damping torque value is required, that is, a state in which a damping torque value is to be determined and reflected in the final torque value.

In particular, the determiner 213-12 may determine the mobility driving state (for example, the first driving state to the third driving state) based on the mobility driving state information.

Meanwhile, if the determiner 213-12 determines the mobility driving state (for example, the first driving state to the third driving state), the first torque value generator 213-1 may determine the virtual elastic body torque value through the virtual elastic body torque value determiner 213-13, the rebound torque value through the rebound torque value determiner 213-14, and the damping torque value through the damping torque value determiner 213-15 based on the mobility driving state (for example, the first driving state to the third driving state) determined by the determiner 213-12.

That is, if the determiner 213-12 determines the mobility driving state (for example, the first driving state to the third driving state), the virtual elastic body torque value determiner 213-13 may determine the virtual elastic body torque value, the rebound torque value determiner 213-14 may determines the rebound torque value, and the damping torque value determiner 213-15 may determine the damping torque value, based on the mobility driving state (for example, the first driving state to the third driving state) determined by the determiner 213-12.

Specifically, the determiner 213-12 may determine whether the mobility driving state is in the mobility start-ON state based on the mobility start-ON information, and if the mobility driving state is in the mobility start-ON state, the determiner 213-12 may determine the mobility driving state as the second driving state.

Meanwhile, the first torque value generator 213-1 may determine the rebound torque value through the rebound torque value determiner 213-14 based on the second driving state determined by the determiner 213-12 if the determiner 213-12 determines the second driving state.

That is, if the determiner 213-12 determines the second driving state, the rebound torque value determiner 213-14 may determine the rebound torque value based on the second driving state determined by the determiner 213-12.

The determiner 213-12 may determine whether the pedal 111 is ahead of the wheel 121 based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information. In addition, if the pedal 111 is ahead of or in front of the wheel 121, the determiner 213-12 may determine the mobility driving state as the first driving state.

For example, the determiner 213-12 may compare one of the pedal rotation position value and the first rotator rotation position value with one of the wheel rotation position value and the second rotator rotation position value to determine whether the pedal 111 is ahead of the wheel 121, and if the pedal 111 is ahead of the wheel 121, there may be determined as the first driving state.

Meanwhile, if the determiner 213-12 determines the first driving state, the first torque value generator 213-1 may determine the virtual elastic body torque value through the virtual elastic body torque value determiner 213-13 based on the first driving state determined by the determiner 213-12.

That is, if the determiner 213-12 determines the first driving state, the virtual elastic body torque value determiner 213-13 may determine the virtual elastic body torque value based on the first driving state determined by the determiner 213-12.

The determiner 213-12 may determine whether the pedal 111 is in reverse rotation based on at least one of the pedal rotation position information, the pedal rotation speed information, the first rotator rotation position information, the first rotator rotation speed information, the wheel rotation position information, the wheel rotation speed information, the second rotator rotation position information, and the second rotator rotation speed information, and if the pedal 111 is in reverse rotation, there may be determined as the third driving state.

For example, the determiner 213-12 may determine the rotation direction of the pedal 111 based on at least one of the pedal rotation position value, the pedal rotation speed value, the first rotator rotation position value, and the first rotator rotation speed value, and determine whether the pedal 111 is in reverse rotation, and if the pedal 111 is in reverse rotation, there may be determined as the third driving state.

Meanwhile, the first torque value generator 213-1 may determine the damping torque value through the damping torque value determiner 213-15 based on the third driving state determined by the determiner 213-12 if the determiner 213-12 determines the third driving state.

That is, if the determiner 213-12 determines the third driving state, the damping torque value determiner 213-15 may determine the damping torque value based on the third driving state determined by the determiner 213-12.

According to the above, the determiner 213-12 may determine whether the mobility starter is ON based on the mobility starter ON information, and if the mobility starter is ON, determine the second driving state. If the determiner 213-12 determines the second driving state, the rebound torque value determiner 213-14 may determine the rebound torque value based on the second driving state determined by the determiner 213-12. The final torque value determiner 213-16 may determine the rebound torque value as the final torque value. The first current value generator 213-2 may generate the first current value based on the final torque value. The first control signal generator 213-3 may perform modulation based on the first current value to generate the first control signal. The first power converter 212 may convert electric energy into power based on the first control signal and provide it to the first rotator 211. The first rotator may assist the pedal unit 110 including the pedal (111) based on the electric energy converted into power by the first power converter 212.

Then, while the mobility is being driven based on the rebound torque value (or while the mobility is moving), the determiner 213-12 may compare one of the pedal rotation position value and the first rotator rotation position value with one of the wheel rotation position value and the second rotator rotation position value to determine whether the pedal 111 is ahead of the wheel 121. If the pedal 111 is ahead of the wheel 121, there may be determined as the first driving state. If the determiner 213-12 determines the first driving state, the virtual elastic body torque value determiner 213-13 may determine the virtual elastic body torque value based on the first driving state determined by the determiner 213-12. The final torque value determiner 213-16 may determine the final torque value by adding the virtual elastic body torque value to the rebound torque value. The first current value generator 213-2 may generate the first current value based on the final torque value. The first control signal generator 213-3 may perform modulation based on the first current value to generate the first control signal. The first power converter 212 may convert electric energy into power based on the first control signal and provide it to the first rotator 211. The first rotator may assist the pedal unit 110 including the pedal (111) based on the electric energy converted into power by the first power converter 212.

Then, while the mobility is being driven (or, while the mobility is moving) based on the rebound torque value and the virtual elastic body torque value, the determiner 213-12 may determine the rotation direction of the pedal 111 based on at least one of the pedal rotation position value, the pedal rotation speed value, the first rotator rotation position value, and the first rotator rotation speed value to determine whether the pedal 111 is in reverse rotation. If the pedal 111 is in the reverse rotation state, there may be determined as the third driving state. If the determiner 213-12 determines the third driving state, the damping torque value determiner 213-15 may determine the damping torque value based on the third driving state determined by the determiner 213-12. The final torque value determiner 213-16 may determine the final torque value by adding the rebound torque value, the virtual elastic body torque value, and the damping torque value. The first current value generator 213-2 may generate the first current value based on the final torque value. The first control signal generator 213-3 may perform modulation based on the first current value to generate the first control signal. The first power converter 212 may convert electric energy into power based on the first control signal and provide it to the first rotator 211. The first rotator may assist the pedal unit 110 including the pedal 111 based on the electric energy converted into power by the first power converter 212.

The determiner 213-12 may determine the driving mode. For example, the determiner 213-12 may determine the driving mode based on the driving mode information provided by the driver.

That is, the driving mode information may include information on the driving mode. Accordingly, the determiner 213-12 may determine the driving mode included in the driving mode information and determine the driving mode based on the determination result.

Here, the driving mode may include a first driving mode to a seventh driving mode.

The first driving mode may be a driving mode for controlling the first rotator 211 based on the virtual elastic body torque value so as to assist the pedal unit 110 including the pedal.

A second driving mode may be a driving mode for controlling the first rotator 211 based on the reaction torque value so as to assist the pedal unit 110 including the pedal 111.

A third driving mode may be a driving mode in which the pedal unit 110 including the pedal 111 is assisted by controlling the first rotator 211 based on the damping torque value.

A fourth driving mode may be a driving mode in which the pedal unit 110 including the pedal 111 is assisted by controlling the first rotator 211 based on the virtual elastic body torque value and the rebound torque value.

A fifth driving mode may be a driving mode in which the pedal unit 110 including the pedal 111 is assisted by controlling the first rotator 211 based on the virtual elastic body torque value and the damping torque value.

A sixth driving mode may be a driving mode in which the pedal unit 110 including the pedal 111 is assisted by controlling the first rotator 211 based on the rebound torque value and the damping torque value.

The seventh driving mode may be a driving mode in which the pedal unit 110 including the pedal 111 is assisted by controlling the first rotator 211 based on the virtual elastic body torque value, the rebound torque value, and the damping torque value.

Meanwhile, if the determiner 213-12 determines the driving mode, the first torque value generator 213-1 may determine the virtual elastic body torque value through the virtual elastic body torque value determiner 213-13, the rebound torque value through the rebound torque value determiner 213-14, and the damping torque value through the damping torque value determiner 213-15 based on the driving mode determined by the determiner 213-12.

That is, if the determiner 213-12 determines the driving mode, the virtual elastic body torque value determiner 213-13 may determine the virtual elastic body torque value based on the driving mode determined by the determiner 213-12, the rebound torque value determiner 213-14 may determine the rebound torque value, and the damping torque value determiner 213-15 may determine the damping torque value.

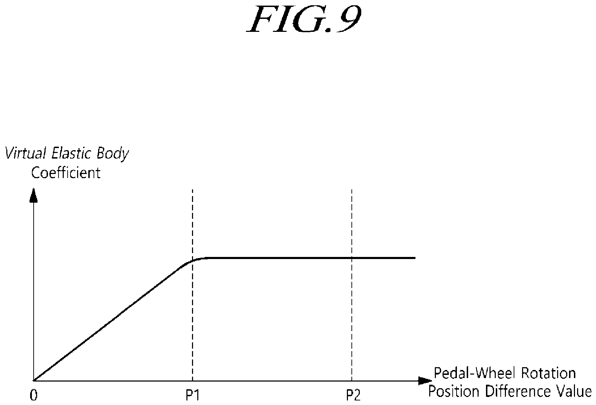

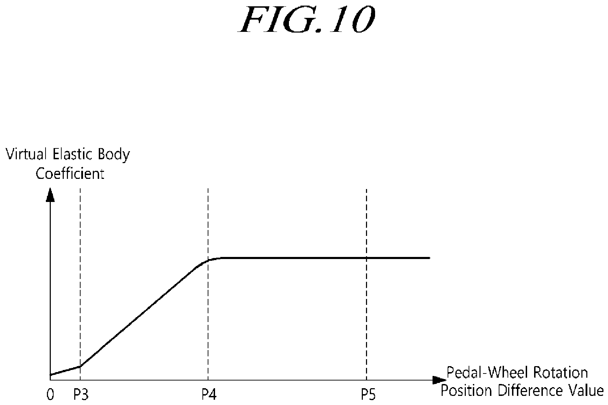

FIG. 9 and FIG. 10 are diagrams for explaining a virtual elastic body coefficient according to the present embodiments.

Referring to FIGS. 9 and 10, a virtual elastic coefficient may include a virtual elastic variable.

Here, the virtual elastic variable may mean a value which changes based on a pedal-wheel rotation position difference value. Accordingly, the virtual elastic coefficient may change based on the pedal-wheel rotation position difference value.

Referring to FIG. 9, the pedal-wheel rotation position difference value may include 0, a first position difference value P1, and a second position difference value P2. The first position difference value P1 may be greater than 0, and the second position difference value P2 may be greater than the first position difference value P1. Here, the first position difference value P1 may be 90 degrees, but is not limited thereto and may be implemented in a modified manner.

Here, the pedal-wheel rotation position difference value greater than or equal to 0 and less than or equal to the first position difference value P1 may be referred to as a first position difference value section.

Here, the pedal-wheel rotation position difference value greater than or equal to the first position difference value P1 and less than or equal to the second position difference value P2 may be referred to as a second position difference value section.

Accordingly, if the pedal-wheel rotation position difference value is in the first position difference value section, the virtual elastic body coefficient may be set to increase proportionally as the pedal-wheel rotation position difference value increases. That is, if the pedal-wheel rotation position difference value is in the first position difference value section, the virtual elastic body coefficient may be set to increase proportionally while having a first slope as the pedal-wheel rotation position difference value increases. Here, the first slope may be implemented in a modified manner.

In addition, if the pedal-wheel rotation position difference value is in the second position difference value section, the virtual elastic coefficient may be set to have a constant value. Here, the constant value may be the same value as the virtual elastic coefficient corresponding to the first position difference value P1.

Referring to FIG. 10, the pedal-wheel rotation position difference value may include 0, a third position difference value P3, a fourth position difference value P4, and a fifth position difference value P5. The third position difference value P3 may be greater than 0, the fourth position difference value P4 may be greater than the third position difference value P3, and the fifth position difference value P5 may be greater than the fourth position difference value P4. Here, the third position difference value P3 may be 5 degrees, and the fourth position difference value P4 may be 90 degrees, but this is not limited thereto and may be implemented in a modified manner.

Here, the pedal-wheel rotation position difference value greater than or equal to 0 and less than or equal to the third position difference value P3 may be referred to as a third position difference value section. In particular, the third position difference value section may mean a gear clearance section.

Here, the pedal-wheel rotation position difference value greater than or equal to the third position difference value P3 and less than or equal to the fourth position difference value P4 may be referred to as a fourth position difference value section.

Here, the pedal-wheel rotation position difference value greater than or equal to the fourth position difference value P4 and less than or equal to the fifth position difference value P5 may be referred to as a fifth position difference value section.

Accordingly, if the pedal-wheel rotation position difference value is in the third position difference value section, the virtual elastic coefficient may be set to increase proportionally as the pedal-wheel rotation position difference value increases. That is, if the pedal-wheel rotation position difference value is in the third position difference value section, the virtual elastic coefficient may be set to increase proportionally with a third slope as the pedal-wheel rotation position difference value increases. Here, the third slope may be implemented in a modified manner.

If the pedal-wheel rotation position difference value is in the fourth position difference value section, the virtual elastic coefficient may be set to increase proportionally with the pedal-wheel rotation position difference value increases.

That is, if the pedal-wheel rotation position difference value is in the fourth position difference value section, the virtual elastic coefficient may be set to increase proportionally with a fourth slope as the pedal-wheel rotation position difference value increases. Here, the fourth slope may be implemented in a modified manner.

Here, the third slope may be smaller than the fourth slope. That is, the virtual elastic coefficient in the case where the pedal-wheel rotation position difference value is in the third position difference value section may be set more gently than the virtual elastic coefficient in the case where the pedal-wheel rotation position difference value is in the fourth position difference value section. That is, the third slope may be more gentle than the fourth slope.

In addition, in the case where the pedal-wheel rotation position difference value is in the fifth position difference value section, the virtual elastic coefficient may be set to have a constant value. Here, the constant value may be the same value as the virtual elastic coefficient corresponding to the fourth position difference value P4.

Referring to FIGS. 1 to 10 again, a mobility driving assist device 200 according to the present embodiments may include a first rotator 211 for assisting a pedal unit 110 including a pedal 111 and mechanically separated from a wheel unit 120 including a wheel 121 for moving a mobility, and a mobility driving control device 300 for controlling the first rotator 211. The mobility driving control device 300 may determine a final torque value based on at least one of a virtual elastic body torque value, a rebound torque value, and a damping torque value determined based on pedal driving state information and wheel driving state information so as to provide a pedal feel to the pedal through the first rotator controlled based on the final torque value. In this case, the virtual elastic body torque value may be a value corresponding to a virtual restoring force for a virtual elastic body which virtually connects the wheel unit including the wheel and the pedal unit including the pedal.

Here, the mobility driving assist device 200 may include at least one of a first driving assist device 210 and the second driving assist device 220. The mobility driving control device 300 according to the present embodiments may include at least one of a first control device 310 and a second control device 320.

Accordingly, the mobility driving assist device 200 according to the present embodiments may include a first rotator 211 for assisting a pedal unit 110 including a pedal 111 and mechanically separated from a wheel unit 120 including a wheel 121 for moving a mobility, and a first driving assist device 210 including a first control device 310 for controlling the first rotator 211. The first control device 310 may include a first controller 213, and the first controller 213 may determine a final torque value based on at least one of a virtual elastic body torque value, a rebound torque value, and a damping torque value determined based on pedal driving state information and wheel driving state information, so as to provide a pedal feel to a pedal 111 through the first rotator 211 controlled based on the final torque value. In this case, the virtual elastic body torque value may be a value corresponding to a virtual restoring force for a virtual elastic body which virtually connects the wheel unit 120 including the wheel 121 and the pedal unit 110 including the pedal 111.

Therefore, according to the present embodiments, it is possible to provide a mobility driving assist device capable of improving pedal feel as well as driving stability.

Referring to FIGS. 1 to 10, a mobility driving system 1 according to the present embodiments may include a mobility driving assist device 200 including a mobility driving device 100 including a pedal unit 110 having a pedal 111 and mechanically separated from a wheel unit 120 including a wheel 121 for moving a mobility, a first rotator 211 for assisting the pedal unit 110 including the pedal 111, and a mobility driving control device 300 for controlling the first rotator 211. The mobility driving control device 300 may determine a final torque value based on at least one of a virtual elastic body torque value, a rebound torque value, and a damping torque value determined based on pedal driving state information and wheel driving state information, so as to provide a pedal feel to a pedal 111 through the first rotator 211 controlled based on the final torque value. In this case, the virtual elastic body torque value may be a value corresponding to a virtual restoring force for a virtual elastic body which virtually connects the wheel unit 120 including the wheel 121 and the pedal unit 110 including the pedal 111.

Here, the mobility driving assist device 200 may include at least one of a first driving assist device 210 and a second driving assist device 220. The mobility driving control device 300 according to the present embodiments may include at least one of a first control device 310 and a second control device 320.

A mobility driving system 1 according to the present embodiments may include a mobility driving assist device 200 including a mobility driving device 100 including a pedal unit 110 having a pedal 111 and mechanically separated from a wheel unit 120 including a wheel 121 for moving a mobility, and a mobility driving assist device 200 including a first driving assist device 210 including a first rotator 211 for assisting the pedal unit 110 including a pedal 111 and a first control device 310 controlling the first rotator 211. The first control device 310 may include a first controller 213, and the first controller 213 may determine a final torque value based on at least one of a virtual elastic body torque value, a rebound torque value, and a damping torque value determined based on pedal driving state information and wheel driving state information, so as to provide a pedal feel to a pedal 111 through the first rotator 211 controlled based on the final torque value. In this case, the virtual elastic body torque value may be a value corresponding to a virtual restoring force for a virtual elastic body which virtually connects the wheel unit 120 including the wheel 121 and the pedal unit 110 including the pedal 111.

Therefore, according to the present embodiments, it is possible to provide a mobility driving system capable of improving pedal feel as well as driving stability.

Hereinafter, it will be described a mobility driving control method according to the present embodiments with reference to the attached drawings. The mobility driving control method according to the present embodiments may be performed through a mobility driving control device 300, a mobility driving assist device 200, and a mobility driving system 1. Accordingly, hereinafter, it will be omitted a description overlapping with the mobility driving control device 300, the mobility driving assist device 200, and the mobility driving system 1 according to the present embodiments described above with reference to FIGS. 1 to 10 for the sake of clarity of explanation.

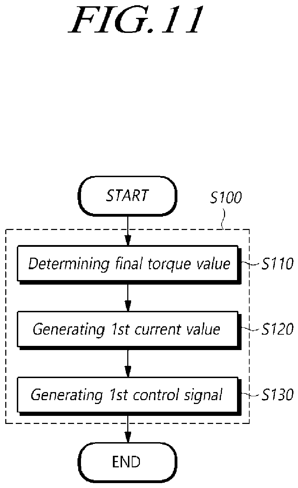

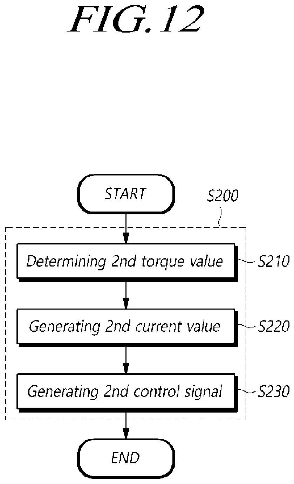

FIG. 11 and FIG. 12 are diagrams for explaining a mobility driving control method according to the present embodiments.

Referring to FIG. 11, the mobility driving control method according to the present embodiments may include a pedal control step (S100).

The pedal control step (S100) may include at least one of a final torque value determination step (S110), a first current value generation step (S120), and a first control signal generation step (S130).

In step S100, the pedal may be controlled.

For example, a mobility driving control method according to the present embodiments may be a mobility driving control method for controlling a first rotator 211 so as to assist a pedal unit 110 including a pedal 111, which is mechanically separated from a wheel unit 120 including a wheel 121 for moving the mobility, and may include a step of determining a final torque value based on at least one of a virtual elastic body torque value, a rebound torque value, and a damping torque value determined based on pedal driving state information and wheel driving state information, so that a pedal feel is provided to the pedal 111 through the first rotator 211 controlled based on a final torque value, In this case, the virtual elastic body torque value may be a value corresponding to a virtual restoring force for a virtual elastic body which virtually connects the wheel unit 120 including the wheel 121 and the pedal unit 110 including the pedal 111.

First, a final torque value may be determined (S110).

Specifically, in step S110, a virtual elastic body torque value, a rebound torque value, and a damping torque value may be determined based on the pedal driving state information and the wheel driving state information.

In step S110, the virtual elastic body torque value may be determined based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information.

That is, in step S110, the virtual elastic body torque value may be determined based on one of the pedal rotation position value and the first rotator rotation position value, and one of the wheel rotation position value and the second rotator rotation position value.

Here, in step S110, a position difference value may be determined by subtracting one of the pedal rotation position value and the first rotator rotation position value from one of the wheel rotation position value and the second rotator rotation position value.

Here, in step S110, the virtual elastic body torque value may be determined based on the position difference value and the virtual elastic body coefficient.

In step S110, the rebound torque value may be determined based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information.

According to one embodiment, in step S110, the rebound torque value may be determined based on one of a pedal rotation position value and a first rotator rotation position value, and one of a wheel rotation position value and a second rotator rotation position value.

According to another embodiment, in step S110, the rebound torque value may be determined based on one of a pedal rotation speed value and a first rotator rotation speed value, and one of a wheel rotation speed value and a second rotator rotation speed value.

According to other embodiments, in step S110, the rebound torque value may be determined based on one of the pedal rotation position value and the first rotator rotation position value, one of the wheel rotation position value and the second rotator rotation position value; and one of the pedal rotation speed value and the first rotator rotation speed value, and one of the wheel rotation speed value and the second rotator rotation speed value.

According to other embodiments, in step S110, the rebound torque value may be determined based on a second torque value.

In step S110, the damping torque value may be determined based on at least one of the pedal rotation position information, the pedal rotation speed information, the first rotator rotation position information, and the first rotator rotation speed information.

That is, in step S110, the damping torque value may be determined based on at least one of the pedal rotation speed value and the first rotator rotation speed value.

In particular, in step S110, an amplified pedal rotation speed value may be determined based on at least one of the pedal rotation speed value and the first rotator rotation speed value, and the amplified pedal rotation speed value may be determined as the damping torque value.

For example, in step S110, the amplified pedal rotation speed value may be determined based on at least one of the pedal rotation speed value and the first rotator rotation speed value and the damping coefficient, and the amplified pedal rotation speed value may be determined as the damping torque value.

In addition, in step S110, an amplified pedal rotation speed value may be determined based on at least one of the power of the pedal rotation speed value and the power of the first rotator rotation speed value, and the amplified pedal rotation speed value may be determined as the damping torque value.

In addition, in step S110, an amplified value of the pedal rotation speed is determined based on at least one of the power of the pedal rotation speed value and the power of the first rotator rotation speed value, and the damping coefficient, and the amplified value of the pedal rotation speed may be determined as the damping torque value.

Then, in step S110, the final torque value may be determined based on at least one of the virtual elastic body torque value, the rebound torque value, and the damping torque value.

Meanwhile, in step S110, a mobility driving state may be determined.

That is, in step S110, the mobility driving state (for example, the first driving state to the third driving state) may be determined based on the mobility driving state information.

In addition, in step S110, if the mobility driving state (for example, the first driving state to the third driving state) is determined, a virtual elastic body torque value, a rebound torque value, and a damping torque value may be determined based on the mobility driving state (for example, the first driving state to the third driving state).

Meanwhile, a driving mode may be determined in step S110.

That is, in step S110, the driving mode may be determined based on the driving mode information provided by the driver.

In addition, in step S110, if the driving mode is determined, a virtual elastic body torque value, a rebound torque value, and a damping torque value can be determined based on the driving mode.

Meanwhile, in step S110, the mobility driving state information may be signal-processed to generate a mobility driving state value.

For example, in step S110, the pedal driving state information and the wheel driving state information may be signal-processed to generate a pedal driving state value and a wheel driving state value.

After step S110, a first current value may be generated (S120).

That is, in step S120, the first current value may be generated based on the final torque value.

In particular, in step S120, the first current value may be generated by performing at least one of torque control and current control for the final torque value.

After step S120, the first control signal may be generated (S130).

That is, in step S130, the first control signal may be generated by performing modulation based on the first current value.

Referring to FIG. 12, the mobility driving control method according to the present embodiments may include a wheel control step (S200).

The wheel control step (S200) may include at least one of a second torque value determination step (S210), a second current value generation step (S220), and a second control signal generation step (S230).

In step S200, the wheels may be controlled.

First, a second torque value may be determined (S210)

Specifically, in step S210, the second torque value may be determined based on pedal driving state information and wheel driving state information.

In step S210, the second torque value may be determined based on at least one of the pedal rotation position information, the pedal rotation speed information, the first rotator rotation position information, and the first rotator rotation speed information, and at least one of the wheel rotation position information, the wheel rotation speed information, the second rotator rotation position information, and the second rotator rotation speed information.

According to one embodiment, in step S210, the second torque value may be determined based on one of the pedal rotation position value and the first rotator rotation position value, and one of the wheel rotation position value and the second rotator rotation position value.

According to another embodiment, in step S210, the second torque value may be determined based on one of the pedal rotation speed value and the first rotator rotation speed value, and one of the wheel rotation speed value and the second rotator rotation speed value.

According to other embodiments, in step S210, a second torque value may be determined based on one of the pedal rotation position value and the first rotator rotation position value, one of the wheel rotation position value and the second rotator rotation position value; and one of the pedal rotation speed value and the first rotator rotation speed value, and one of the wheel rotation speed value and the second rotator rotation speed value.

Meanwhile, in step S210, a mobility driving state value may be generated by signal processing mobility driving state information.

For example, in step S210, a pedal driving state value and a wheel driving state value may be generated by signal processing pedal driving state information and wheel driving state information.

After step S210, a second current value may be generated (S220).

That is, in step S220, a second current value may be generated based on the second torque value.

In particular, in step S220, the second torque value may be generated by performing at least one of torque control and current control to generate the second current value.

After step S220, the second control signal may be generated (S230).

That is, in step S230, modulation may be performed based on the second current value to generate the second control signal.

FIG. 13 is a diagram for explaining a computer system of a mobility driving control device and method, a mobility driving assist device, and a mobility driving system according to the present embodiments.

Referring to FIG. 13, the above-described present embodiments may be implemented in a computer system, for example, as a computer-readable recording medium. As illustrated, a computer system 1000 of a mobility driving control device and method, a mobility driving assist device, and a mobility driving system may include one or more elements of one or more processors 1010, a memory 1020, a storage 1030, a user interface input unit 1040, and a user interface output unit 1050, and the elements may communicate with each other through a bus 1060. In addition, the computer system 1000 may also include a network interface 1070 for connecting to a network. The processor 1010 may be a central processor (CPU) or a semiconductor device that executes processing instructions stored in the memory 1020 and/or the storage 1030. The memory 1020 and the storage 1030 may include various types of volatile/nonvolatile storage media. For example, the memory may include a read-only memory (ROM) 1024 and a random access memory (RAM) 1025.

Accordingly, the present embodiments may be implemented as a computer-implemented method or a nonvolatile computer storage medium storing computer-executable instructions. The instructions, when executed by a processor, may perform a method according to at least one embodiment of the present embodiments.

According to the above, the mobility driving control device and method, the mobility driving assist device, and the mobility driving system according to the present embodiments may be applied to a chainless mobility driving system, and may prevent pedal slip or recover pedal slip that has already occurred, and in particular, may artificially implement an effect similar to connecting a virtual elastic body (or a virtual spring) between a wheel and a pedal so that the reference positions of the pedal and the wheel are naturally aligned.

That is, the mobility driving control device and method according to the present embodiments, the mobility driving assist device, and the mobility driving system may measure the rotational positions of the first rotator (or generator) and the second rotator (or motor), calculate the difference between the rotational position of the first rotator (or generator) and the rotational position of the second rotator (or motor) to which the gear ratio is applied, and generate a virtual spring torque (value) which acts differently depending on the size of the difference.

Here, the virtual spring torque (value) may be defined as a torque opposite to the direction in which the pedal is moving forward, so that the pedal may move in the reverse direction by the virtual spring torque.

In particular, the mobility driving control device and method, the mobility driving assist device, and the mobility driving system according to the present embodiments may be applied to both the case where the pedal is moving forward and the case where the pedal is moving backward, or may also be implemented as a one-way clutch method by being applied only to a positive (or negative) error.

Accordingly, the mobility driving control device and method, the mobility driving assist device, and the mobility driving system according to the present embodiments may prevent pedal slip by increasing the virtual spring torque (value) when the difference in the rotational positions of the pedal and the wheel increases, and reversely rotate the pedal so that the rotational positions of the pedal and the wheel become 0 again (when the driver reduces the force applied to the pedal), or resolve the rotational position difference by rotation due to the inertial movement of the wheel while the pedal stops or proceeds, so that the driver does not perceive the occurrence of pedal slippage.

Meanwhile, the mobility driving control device and method, the mobility driving assist device, and the mobility driving system according to the present embodiments may prevent the risk of rapid reverse rotation of the pedal by applying a damping torque (value). In this case, the damping torque (value) may be a torque (value) which is proportional to the reverse rotation speed of the pedal and acts in the opposite direction to the pedal's direction of travel.

That is, the mobility driving control device and method, the mobility driving assist device, and the mobility driving system according to the present embodiments can improve driving stability by controlling the reverse rotation speed of the pedal by adding a damping torque (value) opposite to the direction of progression of the virtual spring torque (value) when the pedal is quickly reversed by the virtual spring torque (value).

As described above, mobility may mean a movable means of transportation.

Mobility may include at least one of a bicycle, an electric bicycle, a chainless bicycle, a motorcycle, an electric scooter, a micro electric vehicle, an electric vehicle, and a vehicle (such as a one-wheeled vehicle, a two-wheeled vehicle, a three-wheeled vehicle, a four-wheeled vehicle, or an n-wheeled vehicle), but is not limited thereto, and may include any means of transportation.

In particular, mobility may include a bicycle. A bicycle may mean a vehicle that a person sits on and moves by turning the wheels with the power of two legs. Here, the bicycle may include a chainless bicycle. A chainless bicycle may have a structure in which the pedal unit 110 and the wheel unit 120 in the mobility driving device 100 are not connected by a chain unit 130.

Accordingly, the mobility referred to for the present embodiments may have the same meaning even if it is referred to as a bicycle or a chainless bicycle.

Specifically, recently, there has been actively progressing a research and development on electric bicycles capable of moving the bicycle through the power of the electric motor by attaching an electric motor and a battery to a bicycle that is previously driven by human power, and chainless bicycles that do not have a chain connected to the pedals and wheels.

In particular, since a chainless bicycle does not have a chain connected to the pedal and the wheel, there is a problem that the pedal feel is not provided or the pedal slip occurs, resulting in poor pedal feel and poor driving stability.

Accordingly, the present embodiments may provide a (chainless) bicycle driving control device and method, a (chainless) bicycle driving assist device, and a (chainless) bicycle driving system capable of improving pedal feel and driving stability.

The above description has been presented to enable any person skilled in the art to make and use the technical idea of the present disclosure, and has been provided in the context of a particular application and its requirements. Various modifications, additions and substitutions to the described embodiments will be readily apparent to those skilled in the art, and the general principles defined herein may be applied to other embodiments and applications without departing from the spirit and scope of the present disclosure. The above description and the accompanying drawings provide an example of the technical idea of the present disclosure for illustrative purposes only. That is, the disclosed embodiments are intended to illustrate the scope of the technical idea of the present disclosure. Thus, the scope of the present disclosure is not limited to the embodiments shown, but is to be accorded the widest scope consistent with the claims.

**Claims**

1. A mobility driving control device for controlling a first rotator (211) to assist a pedal unit (110), which includes a pedal (111) and is mechanically separated from a wheel unit (120) including a wheel (121) for moving a mobility, configured to:

   determine a final torque value based on at least one of a virtual elastic body torque value, a rebound torque value, and a damping torque value determined based on pedal driving state information and wheel driving state information, so as to provide a pedal feel to the pedal (111) through the first rotator (211) controlled based on the final torque value,
   wherein the virtual elastic body torque value is a value corresponding to a virtual restoring force for a virtual elastic body which virtually connects the wheel unit (120) including the wheel (121) and the pedal unit (110) including the pedal (111).

2. The mobility driving control device of claim 1, comprising a first control device (310) controlling the first rotator (211),

   wherein the first control device (310) includes a first controller (213),
   wherein the first controller (213) determines at least one of the virtual elastic body torque value, the rebound torque value and the damping torque value based on the pedal driving state information and the wheel driving state information, and determines the final torque value based on at least one of the determined virtual elastic body torque value, the rebound torque value and the damping torque value.

3. The mobility driving control device of claim 2, wherein the first controller (213) includes a first torque value generator (213-1),

   wherein the first torque value generator (213-1) includes a virtual elastic body torque value determiner (213-13), a rebound torque value determiner (213-14), a damping torque value determiner (213-15) and a final torque value determiner (213-16),
   wherein the virtual elastic body torque value determiner (213-13) determines the virtual elastic body torque value based on at least one of pedal rotation position information, pedal rotation speed information, first rotator rotation position information and first rotator rotation speed information, and at least one of wheel rotation position information, wheel rotation speed information, second rotator rotation position information and second rotator rotation speed information,

wherein the rebound torque value determiner (213-14) determines the rebound torque value based on at least one of the pedal rotation position information, the pedal rotation speed information, the first rotator rotation position information and the first rotator rotation speed information, and at least one of the wheel rotation position information, the wheel rotation speed information, the second rotator rotation position information and the second rotator rotation speed information,

wherein the damping torque value determiner (213-15) determines the damping torque value based on at least one of the pedal rotation position information, the pedal rotation speed information, the first rotator rotation position information, and the first rotator rotation speed information,

wherein the final torque value determiner (213-16) determines the final torque value based on at least one of the virtual elastic body torque value, the rebound torque value, and the damping torque value.

4. The mobility driving control device of claim 3, wherein the virtual elastic body torque value determiner (213-13) determines the virtual elastic body torque value based on one of a pedal rotation position value and a first rotator rotation position value, and one of a wheel rotation position value and a second rotator rotation position value.

5. The mobility driving control device of claim 4, wherein the virtual elastic body torque value determiner (213-13) determines a position difference value between one of the pedal rotation position value and the first rotator rotation position value and one of the wheel rotation position value and the second rotator rotation position value, and determines the virtual elastic body torque value based on the position difference value and a virtual elastic body coefficient.

6. The mobility driving control device of any of claims 3 to 5, wherein the rebound torque value determiner (213-14) determines the rebound torque value based on one of a pedal rotation position value and the first rotator rotation position value, and one of the wheel rotation position value and the second rotator rotation position value.

7. The mobility driving control device of any of claims 3 to 6, wherein the damping torque value determiner (213-15) determines the damping torque value based on at least one of a pedal rotation speed value and a first rotator rotation speed value.

8. The mobility driving control device of claim 7, wherein the damping torque value determiner (213-15) determines an amplified pedal rotation speed value based on at least one of the pedal rotation speed value and the first rotator rotation speed value, and determines the amplified pedal rotation speed value as the damping torque value.

9. The mobility driving control device of claim 8, wherein the damping torque value determiner (213-15) determines the amplified pedal rotation speed value based on a damping coefficient and at least one of the pedal rotation speed value and the first rotator rotation speed value, and determines the amplified pedal rotation speed value as the damping torque value.

10. The mobility driving control device of any of claims 3 to 9, wherein the first torque value generator (213-1) includes a first signal processor (213-11) which processes the pedal driving state information and the wheel driving state information to generate a pedal driving state value and a wheel driving state value.

11. The mobility driving control device of any of claims 3 to 10, wherein the first torque value generator (213-1) includes a determiner (213-12) for determining a mobility driving state based on mobility driving state information.

12. The mobility driving control device of any of claims 3 to 11, wherein the first torque value generator (213-1) includes a determiner (213-12) for determining a driving mode.

13. The mobility driving control device of any of claims 3 to 12, wherein the first controller (213) includes a first current value generator (213-2),

wherein the first current value generator (213-2) generates a first current value based on the final torque value.

14. The mobility driving control device of claim 13, wherein the first controller (213) includes a first control signal generator (213-3),

wherein the first control signal generator (213-3) performs modulation based on the first current value to generate a first control signal.

15. A mobility driving control method for controlling a first rotator (211) to assist a pedal unit (110), which includes a pedal (111) and is mechanically separated from a wheel unit (120) including a wheel (121) for moving a mobility, comprising:

determining a final torque value based on at least one of a virtual elastic body torque value, a rebound torque value, and a damping torque value determined based on pedal driving state information and wheel driving state information, so as to provide a pedal feel to the pedal (111) through the first rotator (211) controlled based on the final torque value,
wherein the virtual elastic body torque value is a value corresponding to a virtual restoring force for a virtual elastic body which virtually connects the wheel unit (120) including the wheel (121) and the pedal unit (110) including the pedal (111).

## FIG.1

Mobility Driving System(1)

Mobility Driving Device

110 — Pedal Unit
Pedal(111)

130 — Chain Unit
Chain(131)

120 — Wheel Unit
Wheel(121)

100

240 — Mobility Driving Assist Device — 230

Sensor Device

1st Driving Assist Device

210

2nd Driving Assist Device

220

Power Supply Device

200

# FIG.2

210

| 1st Driving Assist Device | | |
|---|---|---|
| 1st Rotator | 1st Power Converter | 1st Controller |

211　　　　　　　212　　　　　　　213

# FIG.3

220

| 2nd Driving Assist Device | | |
|---|---|---|
| 2nd Rotator | 2nd Power Converter | 2nd Controller |

221        222        223

# FIG.4

Sensor Device (240)

**Position Sensor (241)**
- Pedal Position Sensor(241-1)
- Wheel Position Sensor(241-2)
- 1st Rotator Position Sensor(241-3)
- 2nd Rotator Position Sensor(241-4)

**Speed Sensor (242)**
- Pedal Speed Sensor(242-1)
- Wheel Speed Sensor(242-2)
- 1st Rotator Speed Sensor(242-3)
- 2nd Rotator Speed Sensor(242-4)

**Current Sensor (243)**
- 1st Current Sensor(243-1)
- 2nd Current Sensor(243-2)

**Torque Sensor (244)**
- 1st Torque Sensor(244-1)
- 2nd Torque Sensor(244-2)

# FIG.5

*300*

Mobility Driving Control Device

*310* — 1st Control Device

*212* — 1st Power Converter

*213* — 1st Controller

2nd Control Device — *320*

2nd Power Converter — *222*

2nd Controller — *223*

# FIG.6

213

**1st Controller**

213-1

213-2

213-3

**1st Torque Value Generator**

**1st Current Value Generator**

1st Torque Controller(213-21)

1st Current Controller (213-22)

**1st Control Signal Generator**

1st Modulator (213-31)

# FIG.7

2nd Controller — 223

223-1: 2nd Torque Value Generator

223-2: 2nd Current Value Generator
- 2nd Torque Controller (223-21)
- 2nd Current Controller (223-22)

223-3: 2nd Control Signal Generator
- 2nd Modulator (223-31)

EP 4 685 042 A1

*FIG.8*

213-1

1st Torque Value Generator

213-11 — 1st Signal Processor

213-12 — Determiner

213-13 — Virtual Elastic Body Torque Value Determiner

213-14 — Rebound Torque Value Determiner

213-15 — Damping Torque Value Determiner

213-16 — Final Torque Value Determiner

# FIG.9

*FIG.10*

# FIG.11

```
                    ┌──────────┐
                    │  START   │    S100
                    └──────────┘     )
        ┌ ─ ─ ─ ─ ─ ─ ─ ┼ ─ ─ ─ ─ ─ ─ ─ ─ ┐
        │   ┌──────────────────────────┐
        │   │ Determining final torque value │ ──S110
        │   └──────────────────────────┘
        │               │
        │   ┌──────────────────────────┐
        │   │  Generating 1st current value  │ ──S120
        │   └──────────────────────────┘
        │               │
        │   ┌──────────────────────────┐
        │   │  Generating 1st control signal │ ──S130
        │   └──────────────────────────┘
        └ ─ ─ ─ ─ ─ ─ ─ ┼ ─ ─ ─ ─ ─ ─ ─ ─ ┘
                    ┌──────────┐
                    │   END    │
                    └──────────┘
```

# FIG.12

START  S200

Determining 2nd torque value  S210

Generating 2nd current value  S220

Generating 2nd control signal  S230

END

# FIG.13

# EUROPEAN SEARCH REPORT

**Application Number**

EP 24 21 3680

## DOCUMENTS CONSIDERED TO BE RELEVANT

| Category | Citation of document with indication, where appropriate, of relevant passages | Relevant to claim |
|---|---|---|
| X | WO 2017/129275 A1 (SWISSMOVE AG [CH]) 3 August 2017 (2017-08-03) * page 3, line 21 - line 25; figures 1,2 * ----- | 1-15 |

**CLASSIFICATION OF THE APPLICATION (IPC)**

INV.
B62M6/45
B62M19/00

**TECHNICAL FIELDS SEARCHED (IPC)**

B62M
B60L

The present search report has been drawn up for all claims

| Place of search | Date of completion of the search | Examiner |
|---|---|---|
| The Hague | 18 April 2025 | Booij, Nico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 3680

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2025

| Patent document cited in search report | Publication date | Patent family member(s) | | Publication date |
|---|---|---|---|---|
| WO 2017129275 A1 | 03-08-2017 | CN | 108602547 A | 28-09-2018 |
| | | EP | 3408168 A1 | 05-12-2018 |
| | | TW | 201736187 A | 16-10-2017 |
| | | US | 2019031284 A1 | 31-01-2019 |
| | | WO | 2017129275 A1 | 03-08-2017 |

EPO FORM P0459

For more details about this annex : see Official Journal of the European Patent Office, No. 12/82

**REFERENCES CITED IN THE DESCRIPTION**

**Patent documents cited in the description**

- KR 1020240097409